# EUROPEAN PATENT APPLICATION

(11) **EP 4 333 241 A1**
(43) Date of publication of application: **06.03.2024**
(21) Application number: 22794927.8
(22) Date of filing: 27.04.2022
(51) Int. Cl.: H02J 7/00, G05B 15/02

(54) **REMOTE CONTROL POWER SUPPLY, POWER SUPPLY ASSEMBLY, ELECTRICAL DEVICE AND CONTROL METHOD THEREFOR, AND ELECTRICAL SYSTEM**

(30) Priority: 30.04.2021 CN 202110479516; 23.09.2021 CN 202111116173; 28.09.2021 CN 202111144887; 28.09.2021 CN 202111144848; 22.10.2021 CN 202111235878; 01.11.2021 CN 202111283178
(71) Applicant: Zhejiang Litheli Technology Co., Ltd., Ningbo, Zhejiang 315016 (CN)
(72) Inventor: LI, Bin, Ningbo, Zhejiang 315016 (CN)
(74) Representative: Ipside
(86) International application number: PCT/CN2022/089528
(87) International publication number: WO 2022/228457

(57) **Abstract**

The present disclosure provides a remote control power supply, a power supply assembly, an electrical device and a control method therefor, and an electrical system. The remote control power supply is configured to receive, by means of a wireless network, a power-on instruction sent from a cloud and then turn on the electrical device. The remote control power supply includes: a battery or a battery pack configured to supply electric energy to the electrical device; a wireless communication unit configured to be in wireless communication with the cloud; and a control unit configured to receive, by means of the wireless communication unit, the power-on instruction sent from the cloud, and drive the battery or the battery pack according to the power-on instruction to turn on the electrical device. According to the present disclosure, networking and communication functions of the power supply can be achieved, and a user can remotely control electricity usage, such that electricity demands of users for intelligent life are met, and the life demands of users for intelligent electricity usage are met.

## Description

Priority 1: 2021104795169, Application Date: 30 April 2021;
Priority 2: 2021111161736, Application Date: 23 September 2021;
Priority 3: 2021111448878, Application Date: 28 September 2021;
Priority 4: 2021111448488, Application Date: 28 September 2021;
Priority 5: 2021112831788, Application Date: 1 November 2021; and
Priority 6: 202111235878X, Application Date: 22 October 2021.

### Technical Field

The present disclosure relates to the field of power supplying, and more particularly, to a remote control power supply, a power supply assembly, an electrical device and a control method therefor, and an electrical system.

### Background of the Invention

Most traditional power supplies for supplying electric energy to an electrical apparatus are batteries or battery packs. For example, most traditional battery packs for garden tools or household cleaning tools do not have the networked communication function, so that users are need to manually operate to control on-off of the battery packs, the traditional battery packs are not intelligent in application, and the traditional lithium power supply cannot meet intelligent demands in life especially in outdoor leisure scenes.

### Summary of the Invention

The present disclosure provides a remote control power supply, a power supply assembly, an electrical device and a control method therefor, and an electrical system.

Specifically, the present disclosure is implemented by technical solutions as follows.

A first aspect of the present disclosure provides a remote control power supply for an electrical device. The remote control power supply is configured to receive a power-on instruction sent from a cloud by means of a wireless network and then turn on the electrical device; and the remote control power supply includes: a battery or a battery pack, configured to supply electric energy to the electrical device; a wireless communication unit, configured to be in wireless communication with the cloud; and a control unit, configured to receive the power-on instruction sent from the cloud by means of the wireless communication unit, and drive the battery or the battery pack to turn on the electrical device according to the power-on instruction.

A second aspect of the present disclosure provides a power supply assembly for an electrical device. The power supply assembly includes: the remote control power supply described in the first aspect.

A third aspect of the present disclosure provides an electrical device. The electrical device includes: an electrical assembly; and the power supply assembly described in the second aspect; and the power supply assembly is configured to supply electric energy to the electrical assembly.

A fourth aspect of the present disclosure provides an electrical system. The electrical system includes: a mobile communication device; a cloud in wireless communication connection to the mobile communication device; and the power supply assembly described in the second aspect; the remote control power supply of the power supply assembly is in wireless communication connection to the cloud; the mobile communication device is configured to send a power-on request to the cloud, such that the cloud is triggered to send a power-on instruction to the remote control power supply.

A fifth aspect of the present disclosure provides a control method for an electrical device. The method is implemented by a mobile communication device and includes: establishing a wireless communication connection to a cloud, where the cloud is in wireless communication connection to a remote control power supply; and sending, when a power-on request is obtained, the power-on request to the cloud, such that the cloud is triggered to send a power-on instruction to the remote control power supply, the remote control power supply is driven to turn on the electrical device, and the electrical device is in a power consuming state.

A sixth aspect of the present disclosure provides a mobile communication device. The mobile communication device includes: a communication apparatus, configured to establish communication with a cloud by means of a wireless network; a processing apparatus, configured to implement the method described in the fifth aspect; and a memory, configured to process or store a signal, such that the signal is in a physical storage state.

A seventh aspect of the present disclosure provides a control method for an electrical device. The method is implemented by means of a cloud and includes: establishing wireless communication connection to a mobile communication device and a remote control power supply respectively; generating, when a power-on request sent from the mobile communication device is received, a power-on instruction according to the power-on request; and sending the power-on instruction to the remote control power supply, such that the remote control power supply is driven to turn on the electrical device, and the electrical device is in a power consuming state.

An eighth aspect of the present disclosure provides a cloud. The cloud includes: one or more central processing units, which are configured to implement the method described in the seventh aspect; one or more memories and/or mass storage devices; and one or more wired or wireless network interfaces.

A ninth aspect of the present disclosure provides a control method for an electrical device. The method is implemented by means of a remote control power supply and includes: establishing wireless communication connection to a cloud, where the cloud is in wireless communication connection to a mobile communication device; receiving a power-on instruction sent from the cloud, where the power-on instruction is generated by the cloud according to a power-on request sent from the mobile communication device; and turning on the electrical device according to the power-on instruction, such that the electrical device is in a power consuming state.

A tenth aspect of the present disclosure provides a remote control power supply. The remote control power supply includes: a control unit, which is configured to implement the method described in the ninth aspect.

An eleventh aspect of the present disclosure provides a remote control power supply for an electrical device. The remote control power supply is configured to receive a control instruction sent from a mobile communication device by means of a wireless network; and the remote control power supply includes: a battery or a battery pack, configured to supply electric energy to the electrical device; a wireless communication unit, configured to be in wireless communication with the mobile communication device; and a control unit, configured to receive the control instruction sent from the mobile communication device by means of the wireless communication unit; where the control instruction at least includes a power-on instruction, and the control unit is configured to drive the battery or the battery pack to turn on the electrical device according to the power-on instruction.

According to the technical solutions provided in examples of the present disclosure, the remote control power supply is capable of being in wireless communication with the cloud or the mobile communication device, that is, the remote control power supply has networking and communication functions such that a user can remotely control the remote control power supply so as to turn on the electrical device, control of the remote control power supply is more intelligent, and user experience is improved.

It should be understood that the above general description and the following detailed description are merely exemplary and explanatory, and cannot limit the present disclosure.

### Brief description of the Drawings

The drawings, which are incorporated in and constitute a part of the specification, illustrate embodiments consistent with the present disclosure and, together with the specification, serve to explain the principles of the present disclosure.
FIG. 1 is a schematic module diagram illustrating a control principle of a remote control power supply according to a particular example of the present disclosure.
FIG. 2 is a schematic diagram illustrating functional modules of a remote control power supply according to a particular example of the present disclosure.
FIG. 3a is a schematic diagram illustrating a remote control power supply in the form of a single battery according to a particular example of the present disclosure.
FIG. 3b is a schematic diagram illustrating a remote control power supply in the form of three batteries according to a particular example of the present disclosure.
FIG. 3c is a schematic diagram illustrating a remote control power supply in the form of five batteries according to a particular example of the present disclosure.
FIG. 3d is a schematic diagram illustrating a remote control power supply in the form of multiple remote control power supplies combined with each other according to a particular example of the present disclosure, and each of the multiple remote control power supplies is in the form of a single battery.
FIG. 3e is a schematic diagram illustrating a remote control power supply in the form of an energy storage power station according to a particular example of the present disclosure.
FIG. 4a is a schematic diagram illustrating a remote control power supply and an indoor fan to be assembled according to a particular example of the present disclosure.
FIG. 4b is a schematic diagram illustrating assembling of a remote control power supply applicable to an indoor fan according to a particular example of the present disclosure.
FIG. 4c is a schematic diagram illustrating assembling of a remote control power supply applicable to a cleaning robot according to a particular example of the present disclosure.
FIG. 4d is a schematic diagram illustrating assembling of a remote control power supply applicable to an outdoor vehicle-mounted refrigerator according to a particular example of the present disclosure.
FIG. 4e is a schematic diagram illustrating a remote control power supply in the form of an energy storage power station suitable for an outdoor vehicle-mounted refrigerator according to a particular example of the present disclosure.
FIG. 5 is a flowchart illustrating login steps in a control method for an electrical device according to a particular example of the present disclosure.
FIG. 6 is a flowchart illustrating electricity usage steps in a control method for an electrical device according to a particular example of the present disclosure.
FIG. 7 is a flowchart illustrating power-off steps in a control method for an electrical device according to a particular example of the present disclosure.
FIG. 8 is a flowchart illustrating another type of power-off steps in a control method for an electrical device according to a particular example of the present disclosure.
FIG. 9 is a schematic module diagram illustrating another control principle of a remote control power supply according to a particular example of the present disclosure.
FIG. 10 is a schematic diagram illustrating functional modules of a second power supply according to a particular example of the present disclosure.
FIG. 11 is a schematic diagram illustrating a combination of a first power supply and a second power supply suitable for an outdoor vehicle-mounted refrigerator according to a particular example of the present disclosure.
FIG. 12 is a flowchart illustrating login steps in a control method for an electrical device suitable for a combination of a first power supply and a second power supply according to a particular example of the present disclosure.
FIG. 13 is a flowchart illustrating electricity usage steps in a control method for an electrical device suitable for a combination of a first power supply and a second power supply according to a particular example of the present disclosure.
FIG. 14 is a flowchart illustrating power-off steps in a control method for an electrical device suitable for a combination of a first power supply and a second power supply according to a particular example of the present disclosure.
FIG. 15 is a flowchart illustrating another type of power-off steps in a control method for an electrical device suitable for a combination of a first power supply and a second power supply according to a particular example of the present disclosure.
FIG. 16 is a schematic module diagram illustrating another control principle of a remote control power supply according to a particular example of the present disclosure.
FIG. 17 is a schematic diagram illustrating functional modules of a third power supply according to a particular example of the present disclosure.
FIG. 18 is a schematic diagram illustrating a combination of a first power supply/a second power supply and a third power supply suitable for an outdoor vehicle-mounted refrigerator according to a particular example of the present disclosure.
FIG. 19 is a flowchart illustrating login steps in a control method for an electrical device suitable for a combination of a first power supply/a second power supply and a third power supply according to a particular example of the present disclosure.
FIG. 20 is a flowchart illustrating electricity usage steps in a control method for an electrical device suitable for a combination of a first power supply/a second power supply and a third power supply according to a particular example of the present disclosure.
FIG. 21 is a flowchart illustrating power-off steps in a control method for an electrical device suitable for a combination of a first power supply/a second power supply and a third power supply according to a particular example of the present disclosure.
FIG. 22 is a flowchart illustrating another type of power-off steps in a control method for an electrical device suitable for a combination of a first power supply/a second power supply and a third power supply according to a particular example of the present disclosure.
FIG. 23 is a schematic module diagram illustrating another control principle of a remote control power supply according to a particular example of the present disclosure.
FIG. 24 is a schematic module diagram illustrating another control principle of a remote control power supply according to a particular example of the present disclosure.
FIG. 25 is a schematic module diagram illustrating another control principle of a remote control power supply according to a particular example of the present disclosure.
FIG. 26 is a schematic diagram illustrating functional modules of a remote control power supply according to a particular example of the present disclosure.
FIG. 27 is a flowchart illustrating a control method for an electrical device according to a particular example of the present disclosure.
FIG. 28 is a flowchart illustrating a data comparison method in a control method for an electrical device according to a particular example of the present disclosure.
FIG. 29 is a schematic diagram illustrating functional modules of a second power supply according to a particular example of the present disclosure.
FIG. 30 is a flowchart illustrating a control method for an electrical device according to a particular example of the present disclosure.
FIG. 31 is a flowchart illustrating a data comparison method in a control method for an electrical device according to a particular example of the present disclosure.
FIG. 32 is a schematic module diagram illustrating a principle of controlling a plurality of electrical devices by a remote control power supply according to a particular example of the present disclosure.
FIG. 33 is a schematic module diagram illustrating another principle of controlling a plurality of electrical devices by a remote control power supply according to a particular example of the present disclosure.

### Detailed Description of Embodiments

Illustrative examples will be described in detail herein and shown in accompanying drawings illustratively. When the following description relates to accompanying drawings, unless otherwise specified, the same numeral in different accompanying drawings denotes the same or similar elements. Embodiments described in the following illustrative examples do not denote all embodiments consistent with the present disclosure. On the contrary, the embodiments are merely instances of an apparatus and a method consistent with some aspects of the present disclosure as detailed in the appended claims.

The terms used in the present disclosure are merely to describe particular examples, and are not intended to limit the present disclosure. The singular forms such as "a", "the" and "this" used in the present disclosure and the appended claims are also intended to include the plural forms, unless otherwise clearly stated in the context. It should also be understood that the term "and/or" used herein refers to and contains any or all possible combinations of one or more of associated listed items.

It should be understood that although the terms "first", "second", "third", etc. may be employed in the present disclosure to describe all types of information, such information should not be limited to these terms. These terms are merely used for distinguishing the same type of information from each other. For instance, first information can also be referred to as second information, and similarly, second information can also be referred to as first information, without departing from the scope of the present disclosure. Depending on the context, the word "if" as used herein can be interpreted as "in a case that", "when" or "in response to determining".

It should be noted that the examples and features in embodiments described below can be combined with each other without conflict.

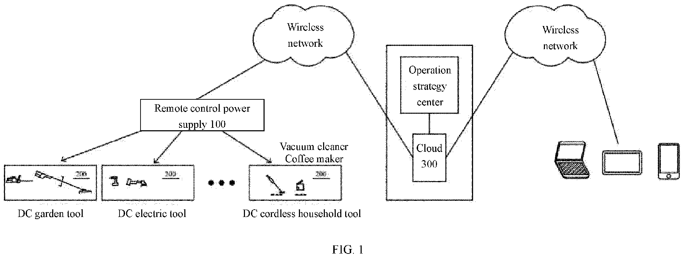

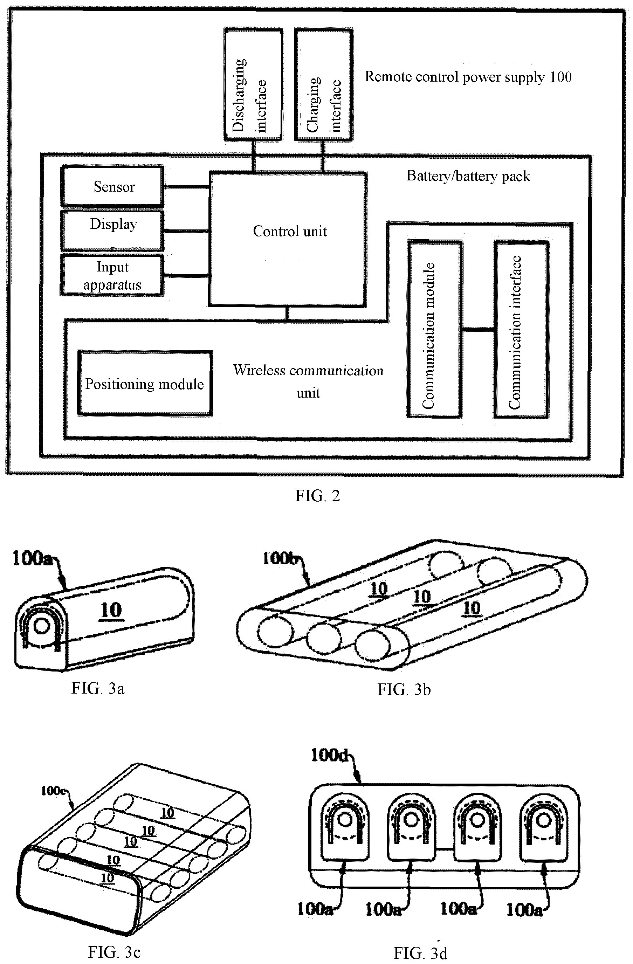

With reference to FIG. 1 and FIG. 2, a schematic module diagram of a control principle and a schematic diagram of functional modules of a remote control power supply 100 are shown. The remote control power supply 100 for an electrical device 200 is configured to receive, by means of a wireless network, a power-on instruction sent from a cloud 300 and then turn on the electrical device 200.

The above electrical device 200 may be an electric tool such as an electric drill, an electric angle grinder, an electric hammer, a sprayer and the like, may also be an electric garden tool such as a pruner, a grass trimmer, a chain saw and the like, may also be an electric household tool such as a vacuum cleaner, a coffee maker, an electric fan, a juicer and the like, and may also be other types of electrical apparatuses such as a glue gun, an air pump, an emergency lamp and the like. In general, the above electrical device 200 may generally refer to work devices using secondary batteries or battery packs (such as an energy storage power supply/an energy storage power station) as power sources. When the electrical device 200 works, a power supply is required to supply electric energy such that the electrical device can be driven to work.

It can be further generalized that the above electrical device 200 includes motorized power tool devices (such as an electric drill, an electric angle grinder, an electric hammer, a pruner, a grass trimmer, a chain saw and the like) or non-motorized electrical devices (such as a lamp, a stereo and the like).

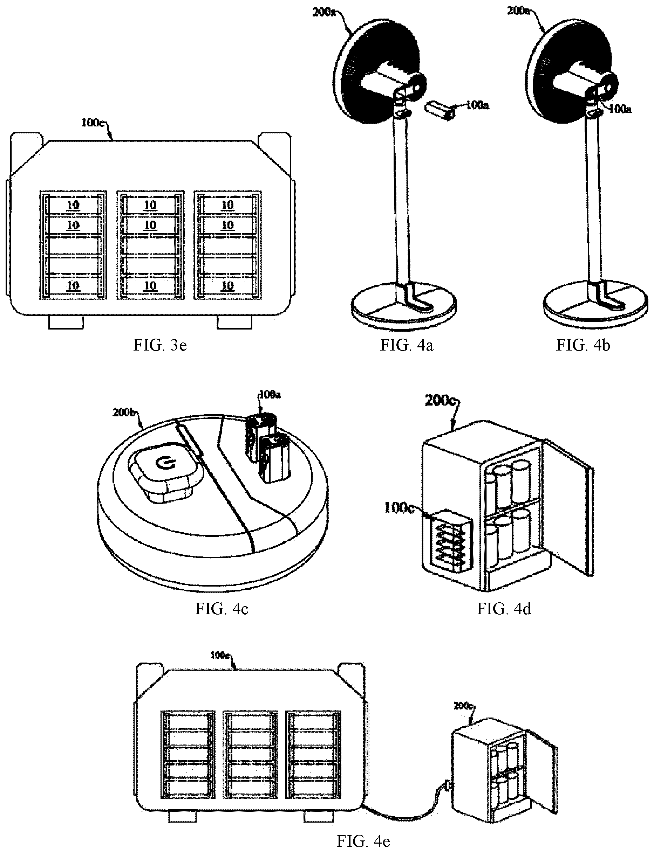

The above remote control power supply 100 may be arranged in the electrical device 200 to supply electric energy to operation of the electrical device. The remote control power supply may be further arranged outside the electrical device 200. For instance, when the remote control power supply 100 is used as a specific energy storage power supply 100e, the energy storage power supply 100e is arranged outside and is connected to a power cord or a data cable of the electrical device 200 to supply power (as shown in FIG. 4e).

Certainly, the above remote control power supply 100 may be preferably mounted to the electrical device 200 in a freely mountable and dismountable, that is, detachable manner. In this case, the remote control power supply 100 is suitable for usage of different types of electrical devices 200, that is, the remote control power supply 100 may be shared by the electric tool, the electric garden tool and the electric household tool.

For instance, a user has a remote control power supply 100 of 3.6 V, 12 V or 20 V, which may be used for the electric drill, the pruner, the vacuum cleaner or the emergency lamp. Such a remote control power supply 100 can satisfy different use scenarios of the user.

When the remote control power supply 100 is assembled and connected to the electrical device 200, the remote control power supply 100 is suitable for being mechanically and electrically connected to the electrical device 200, is fixed through mechanical connection, and supplies electric energy to the electrical device 200 through electrical connection.

With reference to FIG. 2, a schematic diagram of functional modules of a remote control power supply 100 is shown. The remote control power supply 100 includes: a battery 10 or a battery pack, which is configured to supply electric energy to an electrical device 200; a wireless communication unit, which is configured to be in wireless communication with a cloud 300; and a control unit, which is configured to receive, by means of the wireless communication unit, a power-on instruction sent from the cloud 300, and drive the battery 10 or the battery pack to turn on the electrical device according to the power-on instruction.

The above battery 10 or the battery pack at least includes one battery such as one 21700-type battery (21700 battery for short). Certainly, the battery 10 or the battery pack may also include three 21700 batteries connected in series, or five 21700 batteries connected in series to meet demands of electrical apparatuses of different voltage platforms. It is to be noted that the above description is merely an instance and is not limited to the application of the 21700 battery, and other types of batteries such as a 18650-type battery (18650 battery for short) can also be used.

Moreover, the above battery pack may further include at least one battery module, and the battery module includes a plurality of batteries connected in series or in parallel. Thus, the above battery pack is used as an energy storage power supply or an energy storage power station 100e.

In addition, the above remote control power supply 100 may at least include a first remote control power supply and a second remote control power supply connected in series or in parallel.

Specifically, the above remote control power supply 100 may be in various forms. For instance, referring to a schematic diagram as shown in FIG. 3a illustrating a remote control power supply 100a in the form of a single battery, only one 21700 battery 10 is arranged in the remote control power supply 100a; referring to a schematic diagram as shown in FIG. 3b illustrating a remote control power supply 100b in the form of three batteries, three 21700 batteries 10 connected in series are arranged in the remote control power supply 100b; referring to a schematic diagram as shown in FIG. 3c illustrating a remote control power supply 100c in the form of five batteries, five 21700 batteries 10 connected in series are arranged in the remote control power supply 100c; and referring to a schematic diagram as shown in FIG. 3d illustrating a remote control power supply 10d in the form of multiple remote control power supplies combined with each other (as shown in FIG. 3a), and each of the multiple intelligent power supplies is in the form of a single battery; the remote control power supply specifically includes four remote control power supplies 100a connected in series or in parallel shown in FIG. 3d, and certainly may include a plurality of remote control power supplies 100b or remote control power supplies 100c connected in series or in parallel.

With reference to FIG. 3e, a schematic diagram illustrating that a remote control power supply is in the form of an energy storage power station is shown, the remote control power supply includes at least one battery module, and the battery module includes a plurality of batteries 10. In this case, the battery or the battery pack is used as an energy storage power supply or an energy storage power station.

The above wireless communication unit is configured to be in wireless communication with the cloud 300, and at least includes a communication module. It is important to note that the communication module may include a cellular (such as 2G/3G/4G/5G/narrow band internet of things (NB-IOT)/long term evolution machine(LTE-M)) communication module, a non-cellular (such as WiFi/Bluetooth/ZigBee/long range radio (Lora)/Sigfox) communication module, or the cellular and non-cellular communication modules.

For instance, the above wireless communication unit may have a 4G/5G communication function, a WiFi/Bluetooth connection function, or both the 4G/5G and WiFi/Bluetooth connection functions.

The above cloud is a server, and the server mentioned herein should be understood as a service point that provides processing, database and communication facilities. For instance, the server may be a single physical processor with relevant communication, data storage and database facilities, or it may be an aggregate of networked or clustered processors, relevant networks and storage devices, and carry out operations on software, one or more database systems, and applications (Apps) supporting services provided by the server. The server may widely vary in configuration or performance, but generally include one or more central processing units and a memory. The server further includes one or more mass storage devices, one or more power supplies, one or more wired or wireless network interfaces, one or more input/output interfaces, or one or more operating systems, such as Windows Server, Mac OS X, Unix, Linux, FreeBSD, etc.

According to some examples of the present disclosure, the cloud may be an integral server or a distributed server across a plurality of computers or computer data centers. The server may be multiple types of servers and is not limited to a network/web server, a news server, a mail server, a message server, an advertisement server, a file server, an application server, an interaction server, a database server or a proxy server. In some examples, each server may include hardware, software, an embedded logic assembly configured to execute appropriate functions supported or implemented by the server, or a combination of two or more such assemblies. In the present disclosure, the server is configured to provide all functions required to support remote control of the above remote control power supply.

According to a particular example of the present disclosure, with reference to FIG. 2, a schematic diagram of functional modules of a remote control power supply is shown, and the remote control power supply 100 includes a control unit, an input apparatus and a communication interface.

The input apparatus and the communication interface are in communication connection to/with the control unit respectively. The control unit includes a microprocessor configured to process data and a memory configured to store data. The control unit may be in two-way/bidirectional communication with the cloud by means of the communication interface, and may also be in bidirectional communication with a mobile communication device by means of the communication interface. A user may input an instruction or information into the control unit by means of the input apparatus, so as to cause the control unit to execute contents of the instruction or information.

The control unit of the remote control power supply is connected to the cloud by means of the communication interface, the cloud establishes communication with the mobile communication device by means of a wireless network, the mobile communication device controls the remote control power supply by means of the cloud, and the remote control power supply regularly reports status information to the cloud. The status information includes one or more of electricity usage status information, power-off status information, position information, residual capacity, a temperature, and the like.

In addition, the remote control power supply further includes a sensor and a display, and the sensor and the display are in communication connection to the control unit respectively. The sensor may collect status information (such as the temperature, the residual capacity, the position information and the like) of the battery or the battery pack in real time, and send the status information to the control unit. The display may display contents (such as the temperature, the residual capacity, the position information and the like) and/or an interface (such as an interactive interface) desired by the user as needed. Certainly, the display and the sensor are not necessary components of the remote control power supply.

In addition, the above wireless communication unit is configured to be in wireless communication with the cloud 300, and in addition to the above communication module, the wireless communication unit may also include a positioning module, such as a global navigation satellite system (GNSS) module or a global positioning system (GPS) module, which includes a GPS module or a Beidou (satellite) module.

It is to be noted that the above control unit is further suitable for being configured to receive a power-off instruction sent from the cloud by means of the wireless communication unit, and drive the battery or the battery pack to turn off the electrical device according to the power-off instruction, such that the electrical device is in a turn-off state.

The control unit includes: an electronic controller, which is configured to identify a wireless signal received by the wireless communication unit, and drive an executor to act; and the executor, which is configured to execute actions of turning on or turning off the electrical device.

The wireless signal may include the power-on instruction or the power-off instruction in the above example. Specifically, when the cloud sends a power-on instruction to the wireless communication unit, the wireless signal is the power-on instruction; and when the cloud sends a power-off instruction to the wireless communication unit, the wireless signal is the power-off instruction. It can be understood that when the cloud sends other signals except for the power-on instruction and the power-off instruction to the wireless communication unit, the wireless signal is the other signals.

In a feasible example, the executor is a circuit switch that is simple in structure and low in cost. Certainly, in other examples, the executor may be other structures capable of turning on or turning off the electrical device.

The power-on instruction is generated when the cloud receives a power-on request sent from the mobile communication device such that the remote control power supply can be remotely controlled to turn on the electrical device without manual operation on a key of the remote control power supply.

### [Application scenario 1]

When a remote control power supply 100 is in a Wireless Fidelity (WiFi) network coverage environment, such as an indoor home environment, the remote control power supply 100 is connected to a home WiFi network by means of a non-cellular network communication module, such as a WiFi communication module, and is in wireless communication with a cloud by means of the WiFi network. A user implements wireless communication with the cloud by means of cellular data of a mobile phone, such as a 4G or 5G signal. Certainly, when the user is also in the WiFi network coverage environment, the user may implement wireless communication with the cloud by connecting a WiFi communication module of the mobile phone to the WiFi network.

In this case, the user sends a power-on instruction to the cloud 300 by a mobile communication device by means of a wireless network, the cloud 300 sends the power-on instruction by means of the wireless network, and a control unit of the remote control power supply 100 receives the power-on instruction by means of the connected wireless network, so as control a battery 10 or a battery pack to turn on an electrical device.

Specifically with reference to FIG. 4a, FIG. 4b and FIG. 4c, a schematic diagram of a remote control power supply and an indoor fan to be assembled, a schematic diagram illustrating that a remote control power supply is assembled and applicable to an indoor fan, and a schematic diagram illustrating that a remote control power supply is assembled and applicable to a cleaning robot are shown, an indoor fan 200a or a cleaning robot 200b is connected to a remote control power supply (such as a remote control power supply 100a in the form of a single battery) respectively, and the remote control power supply supplies electric energy for work of the indoor fan 200a and the cleaning robot 200b. In this case, the remote control power supply 100 is in a WiFi network coverage environment, and the remote control power supply 100 is connected to a home WiFi network by means of the WiFi communication module, and is in wireless communication with a cloud 300 by means of the WiFi network. Even if a user is located outdoors, such as in a studio or on the way home from work, the user can remotely control, by means of a terminal application (APP) through the cloud 300, the remote control power supply 100 to be turned on, such that an indoor fan or a cleaning robot can be turned on to work.

With reference to FIG. 4a, FIG. 4b and FIG. 4c, a schematic diagram of a remote control power supply and an indoor fan to be assembled, a schematic diagram illustrating that a remote control power supply is assembled and applicable to an indoor fan, and a schematic diagram illustrating that a remote control power supply is assembled and applicable to a cleaning robot are shown, and the remote control power supply 100 is suitable for being coupled to an electrical device 200 in a cordless manner and may be detached.

### [Application scenario 2]

When a user carries a remote control power supply 100 outdoors without WiFi network coverage, the remote control power supply 100 is connected to a cloud 300 by means of a cellular communication module, such as a 4G or 5G communication module. The user implements wireless communication with the cloud 300 by means of cellular data of a mobile phone, such as a 4G or 5G signal.

In this case, the user sends a power-on instruction to the cloud 300 through a mobile communication device by means of a wireless network, the cloud 300 sends the power-on instruction by means of the wireless network, and a control unit of the remote control power supply 100 receives the power-on instruction by means of the connected wireless network, so as control a battery 10 or a battery pack to turn on an electrical device.

With reference to FIG. 4d, a schematic diagram illustrating that a remote control power supply is assembled and applicable to an outdoor vehicle-mounted refrigerator is shown, and a remote control power supply 100 (such as a remote control power supply 100c in the form of five batteries) supplies electric energy to an outdoor vehicle-mounted refrigerator 200c. In this case, the remote control power supply 100 is located outdoors without WiFi network coverage, the remote control power supply 100 is connected to the cloud by means of a cellular communication module in the remote control power supply, such as a 4G or 5G communication module. A user can remotely control, by means of a terminal APP through the cloud, the remote control power supply 100 to be turned on such that the outdoor vehicle-mounted refrigerator 200c can be turned on to work.

Similarly, with reference to FIG. 4d, a schematic diagram illustrating that a remote control power supply is assembled and applicable to an outdoor vehicle-mounted refrigerator is shown, and the remote control power supply 100 is suitable for being coupled to an electrical device 200 in a cordless manner and may be detached.

With reference to FIG. 4e, another form, that is, a form of an energy storage power station, of a remote control power supply 100 is shown, a remote control power supply (such as a remote control power supply 100e in the form of an energy storage power station) supplies electric energy to an outdoor vehicle-mounted refrigerator 200c. In this case, the remote control power supply 100 includes a plurality of battery modules, the battery module includes a plurality of batteries 10, and the remote control power supply 100 is used as an energy storage power supply or an energy storage power station.

In this case, the remote control power supply 100 is located outdoors without WiFi network coverage, and the remote control power supply 100 is connected to the outdoor vehicle-mounted refrigerator 200c by means of a power cord, and is connected to a cloud by means of a cellular communication module in the remote control power supply, such as a 4G or 5G communication module. A user can remotely control, by means of a terminal APP through the cloud, the remote control power supply 100 to be turned on, such that the outdoor vehicle-mounted refrigerator 200c can be turned on to work.

In addition, a power-off instruction is generated when the cloud receives a power-off request sent from the mobile communication device such that the remote control power supply can be remotely controlled to turn off the electrical device without manual operation on a key of the remote control power supply. According to another aspect of the present disclosure, a control method of/for an electrical device is provided, and is configured to control the above electrical device 200 based on a remote control power supply 100. In some examples, the control method for an electrical device 200 includes some or all of login steps, electricity usage steps, and power-off steps. Each step of the control method in the present disclosure will be described in detail below with reference to the drawings.

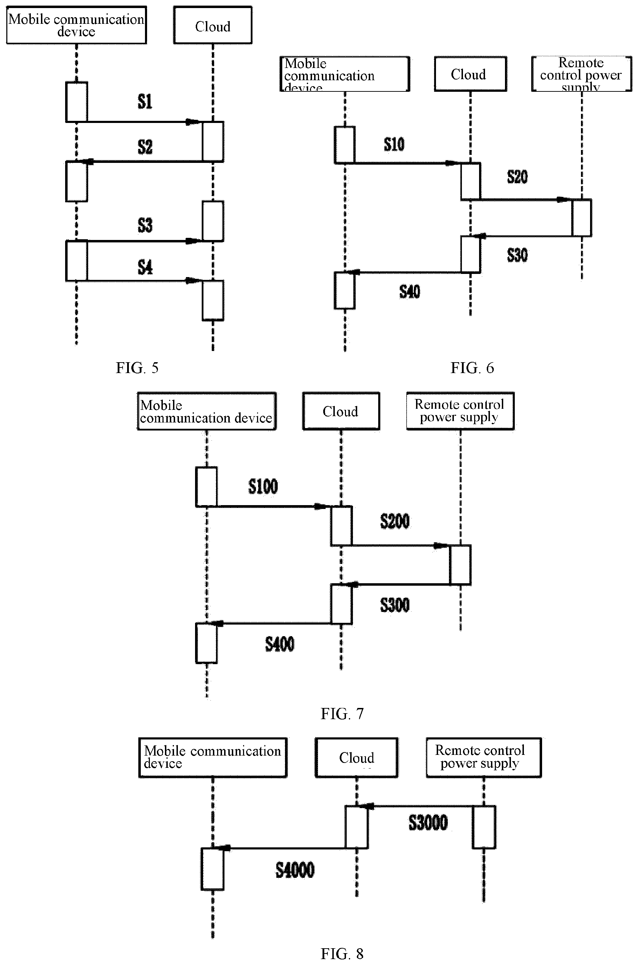

FIG. 5 shows a flowchart illustrating login steps in a control method for an electrical device according to the present disclosure.

A user is required to register online and fill in necessary user information when using the electrical device and a remote control power supply for the first time. Certainly, the user may download a user terminal application suitable for the remote control power supply from a cloud to a mobile communication device by means of a network, and locally install the application to the mobile communication device; or the user terminal application suitable for the remote control power supply has been installed on the mobile communication device of the user in advance. In the login steps, the user starts the user terminal application on the mobile communication device and enables the mobile communication device to establish connection to the cloud.

Step S1: a mobile communication device running a user terminal application requests a verification code from a cloud 300; step S2: after receiving a verification code request sent from the mobile communication device of a user, the cloud 300 performs verification and confirmation, and sends the verification code to the mobile communication device in the manner of a message, an email, a voice call, etc.; step S3: after receiving the verification code sent from the cloud 300, the user inputs the verification code into the mobile communication device, and sends the verification code to the cloud 300 by means of the mobile communication device through a network; and step S4: the cloud 300 verifies the verification code and sends login confirmation information to the mobile communication device of the user.

FIG. 6 shows a flowchart illustrating controlling an electrical device to be turned on.

Step S10: a mobile communication device sends a power-on request to a cloud 300; step S20: after receiving the power-on request, the cloud 300 sends a power-on instruction to a remote control power supply 100 for power on; step S30: the remote control power supply 100 sends power-on status information to the cloud 300; and step S40: the cloud 300 feeds back the power-on status information to the mobile communication device.

Power-off steps will be described next.

With reference to FIG. 7, when a user is required to finish work of an electrical device, a power-off request is sent to a cloud 300 by means of a mobile communication device (step S100); after the cloud 300 receives the power-off request, a power-off instruction is sent to the remote control power supply 100 for power off (step S200); after the remote control power supply 100 receives the instruction, power-off status information of the remote control power supply 100 is sent to the cloud 300 (step S300); and in a situation that the cloud 300 confirms power off of the remote control power supply 100 based on the power-off status information of the remote control power supply 100, information confirming successful power off is sent to the mobile communication device, and current electricity usage is ended (step S400).

In addition, the power-off steps in the present disclosure may further be implemented by automatic power off of the electrical device. Specifically with reference to FIG. 8, after automatic power off of the electrical device, a remote control power supply actively reports power-off status information to a cloud (step S3000); and the cloud receives the power-off status information and feeds back the power-off status information to a mobile communication device such that a user can be reminded of power off of the electrical device (step S4000).

Specifically, a sensor, such as a temperature sensor is arranged in the electrical device 200. When the sensor detects that a temperature reaches a preset threshold value, a power supply circuit between the remote control power supply and the electrical device is automatically closed.

With regard to a mobile communication device, a control method for an electrical device according to an example of the present disclosure may include: (1) establishing wireless communication connection to a cloud (that is, login steps), where the cloud is in wireless communication connection to a remote control power supply; and (2) sending, when a power-on request is obtained, the power-on request to the cloud, such that the cloud is triggered to send a power-on instruction to the remote control power supply, the remote control power supply is driven to turn on the electrical device, and the electrical device is in a power consuming state.

In some examples, the control method for an electrical device further includes: sending, when a power-off request is obtained, the power-off request to the cloud, such that the cloud is triggered to send a power-off instruction to the remote control power supply, and the remote control power supply is driven to turn off the electrical device. Further, the control method for an electrical device further includes: receiving information confirming successful power off sent from the cloud, where the information confirming successful power off is determined by the cloud based on power-off status information of the remote control power supply sent from the remote control power supply.

In some examples, the control method for an electrical device further includes: receiving information indicating automatic power off of the electrical device sent from the remote control power supply and forwarded by the cloud.

With regard to a cloud, the control method for an electrical device may include steps as follows: (1) establishing wireless communication connection to a mobile communication device and a remote control power supply respectively; (2) generating, when a power-on request sent from the mobile communication device is received, a power-on instruction according to the power-on request; and (3) sending the power-on instruction to the remote control power supply, such that the remote control power supply is driven to turn on the electrical device, and the electrical device is in a power consuming state.

In some examples, the control method for an electrical device further includes: generating, when a power-off request sent from the mobile communication device is received, a power-off instruction according to the power-off request; and sending the power-off instruction to the remote control power supply, such that the remote control power supply is driven to turn off the electrical device. Further, the control method for an electrical device further includes: receiving power-off status information of the remote control power supply sent from the remote control power supply; determining successful power off of the remote control power supply according to the status information; and sending information confirming successful power off to the mobile communication device.

In some examples, the control method for an electrical device further includes: forwarding information indicating automatic power off of the electrical device sent from the remote control power supply to the mobile communication device.

With regard to a remote control power supply, the control method for an electrical device may include steps as follows: (1) establishing wireless communication connection to a cloud, where the cloud is in wireless communication connection to a mobile communication device; (2) receiving a power-on instruction sent from the cloud, where the power-on instruction is generated by the cloud according to a power-on request sent from the mobile communication device; and (3) turning on the electrical device according to the power-on instruction, such that the electrical device is in a power consuming state.

In some examples, the control method for an electrical device further includes: receiving a power-off instruction sent from the cloud, where the power-off instruction is generated by the cloud according to a power-off request sent from the mobile communication device; and turning off the electrical device according to the power-off instruction. Further, the control method for an electrical device further includes: sending power-off status information of the remote control power supply to the cloud, such that the cloud determines, according to the status information, whether successful power off of the remote control power supply is achieved.

In some examples, the control method for an electrical device further includes: forwarding information indicating automatic power off of the electrical device to the mobile communication device by means of the cloud during automatic power off of the remote control power supply and the electrical device.

It should be noted herein that the above mobile communication device at least includes a communication apparatus, a processing apparatus and a memory. The communication apparatus is configured to send or receive a signal by means of a wired or wireless network; the processing apparatus includes an application processing part and a radio frequency/digital signal processor; and the memory is configured to process or store the signal in a physical storage status; and the mobile communication device is an intelligent terminal, such as a mobile phone, a pad, a notebook and the like.

The above cloud at least includes one or more central processing units, one or more memories and/or mass storage devices; and one or more wired or wireless network interfaces.

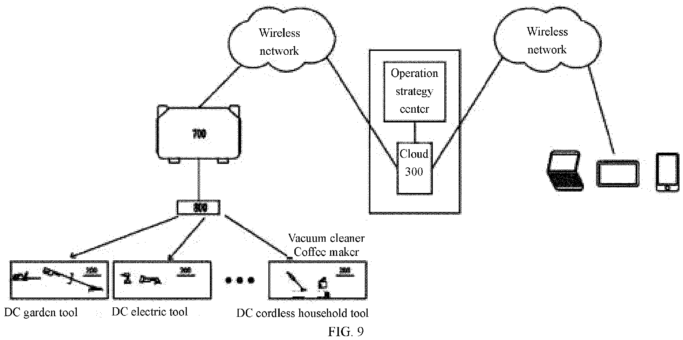

With reference to FIG. 9, a schematic module diagram of another control principle of a remote control power supply is shown, and the remote control power supply includes a first power supply 700 (the first power supply 700 shown in FIG. 9 may be referred to as an energy storage power supply) and a second power supply 800.

The first power supply 700 includes a wireless communication unit, which is configured to be in wireless communication with a cloud 300, the wireless communication unit at least includes a communication module, and specifically, the communication module is a cellular (such as 2G/3G/4G/5G/NB-IOT/LTE-M) communication module.

The second power supply 800 also includes a wireless communication unit, which is configured to be in wireless communication with the first power supply 700, the wireless communication unit at least includes a communication module, and specifically, the communication module is a non-cellular (such as WiFi/Bluetooth/ZigBee/Lora/Sigfox) communication module.

The second power supply 800 is connected to an electrical device 200 and is configured to supply electric energy to the electrical device 200. Similarly, the electrical device 200 may be an electric tool such as an electric drill, an electric angle grinder, an electric hammer, a sprayer and the like, may also be an electric garden tool such as a pruner, a grass trimmer, a chain saw and the like, may also be an electric household tool such as a vacuum cleaner, a coffee maker, an electric fan, a juicer and the like, and may also be other types of electrical apparatuses such as a glue gun, an air pump, an emergency lamp and the like. In general, the above electrical device 200 may generally refer to work devices using secondary batteries or battery packs (such as the energy storage power supply/energy storage power station) as power sources. When the electrical device 200 works, a power supply is required to supply electric energy such that the electrical device can be driven to work.

Similarly, it can be further generalized that the above electrical device 200 includes motorized power tool devices (such as an electric drill, an electric angle grinder, an electric hammer, a pruner, a grass trimmer, a chain saw and the like) or non-motorized electrical devices (such as a lamp, a stereo and the like).

The above second power supply 800 may be arranged in the electrical device 200 to supply electric energy to operation of the electrical device. The second power supply may be further arranged outside the electrical device 200. For instance, when the second power supply 800 is used as a specific energy storage power supply 100e, the energy storage power supply 100e is arranged outside and is connected to a power cord or a data cable of the electrical device 200 to supply power (as shown in FIG. 4e).

Certainly, the above second power supply 800 may be preferably mounted to the electrical device 200 in a freely mountable and dismountable manner. In this case, the second power supply 800 is suitable for usage of different types of electrical devices 200, that is, the second power supply 800 may be shared by the electric tool, the electric garden tool and the electric household tool.

For instance, a user has a second power supply 800 of 3.6 V, 12 V or 20 V, which may be used for the electric drill, the pruner, the vacuum cleaner or the emergency lamp. Such a second power supply 800 can satisfy different use scenarios of the user.

When the second power supply 800 is assembled and connected to the electrical device 200, the second power supply 800 is suitable for being mechanically and electrically connected to the electrical device 200, is fixed through mechanical connection, and supplies electric energy to the electrical device 200 through electrical connection.

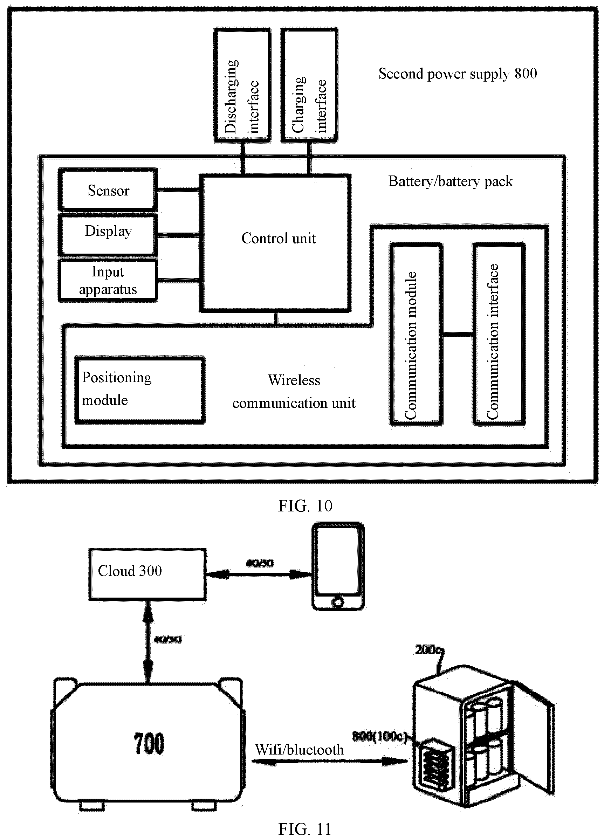

With reference to FIG. 10, a schematic diagram of functional modules of a second power supply is shown. The second power supply 800 includes: a battery 10 or a battery pack, which is configured to supply electric energy to an electrical device 200; a wireless communication unit, which is configured to be in wireless communication with a first power supply 700; and a control unit, which is configured to receive, by means of the wireless communication unit of the second power supply 800, a power-on instruction sent from the first power supply 700, and drive the battery 10 or the battery pack to turn on the electrical device according to the power-on instruction, such that the electrical device is in a power consuming state. It should be noted that the power-on instruction sent from the first power supply 700 is actually sent from a cloud to the first power supply 700, that is, the first power supply 700 is configured to forward the power-on instruction sent from the cloud to the wireless communication unit of the second power supply 800.

The above battery 10 or the battery pack at least includes one battery such as one 21700 battery. Certainly, the battery 10 or the battery pack may also include three 21700 batteries connected in series, or five 21700 batteries connected in series to meet demands of electrical apparatuses of different voltage platforms. It is to be noted that the above description is merely an instance and is not limited to the application of the 21700 battery, and other types of batteries such as a 18650 battery can also be used.

Moreover, the above battery pack may further include at least one battery module, and the battery module includes a plurality of batteries connected in series or in parallel. Thus, the above battery pack is used as an energy storage power supply or an energy storage power station 100e.

In addition, the above second power supply 800 may at least include a first remote control power supply and a second remote control power supply connected in series or in parallel.

Specifically, the above second power supply 800 may be in various forms, for instance, a form of a single battery as shown in FIG. 3a, a form of three batteries as shown in FIG. 3b, a form of five batteries as shown in FIG. 3c, a form of multiple remote control power supplies combined with each other in which each of the multiple intelligent power supplies is in the form of a single battery (as shown in FIG. 3a) as shown in FIG. 3d, or a form of an energy storage power station as shown in FIG. 3e.

According to a particular example of the present disclosure, with reference to FIG. 10, a schematic diagram of functional modules of a second power supply is shown, and the second power supply 800 includes a control unit, an input apparatus and a communication interface.

The input apparatus and the communication interface are in communication connection to the control unit respectively. The control unit includes a microprocessor configured to process data and a memory configured to store data. The control unit may be in communication with the first power supply 700 by means of the communication interface, and may also be in communication with a mobile communication device by means of the communication interface. A user may input an instruction or information into the control unit by means of the input apparatus, so as to cause the control unit to execute contents of the instruction or information.

The control unit of the second power supply 800 is connected to the first power supply 700 by means of the communication interface, the first power supply 700 establishes communication with the cloud by means of a wireless network (such as 4G or 5G), the cloud establishes communication with the mobile communication device by means of the wireless network, the mobile communication device controls the second power supply 800 by means of the cloud and the first power supply 700, and the second power supply 800 regularly reports status information to the cloud by means of the first power supply 700. The status information includes one or more of electricity usage status information, power-off status information, position information, residual capacity, a temperature, and the like.

In addition, the second power supply 800 further includes a sensor and a display, and the sensor and the display are in communication connection to the control unit respectively. The sensor may collect status information (such as the temperature, the residual capacity, the position information and the like) of the battery or the battery pack in real time, and send the status information to the control unit. The display may display contents (such as the temperature, the residual capacity, the position information and the like) and/or an interface (such as an interactive interface) desired by the user as needed. Certainly, the display and the sensor are not necessary components of the second power supply.

In addition, the wireless communication unit of the above second power supply 800 is configured to be in wireless communication with the first power supply 700, and in addition to the above communication module, the wireless communication unit may also include a positioning module, such as a GNSS module or a GPS module, which includes a GPS module or a Beidou module.

It is to be noted that the above control unit is further suitable for being configured to be connected to the first power supply by means of the wireless communication unit of the second power supply 800, receive a power-off instruction sent from the cloud by means of the first power supply, and drive the battery or the battery pack to turn off the electrical device according to the power-off instruction, and in this case, the electrical device is in a power-off state. It should be noted that the power-off instruction sent from the cloud is forwarded to the wireless communication unit of the second power supply 800 by means of the first power supply 700.

The control unit of the second power supply 800 includes: an electronic controller, configured to identify a wireless signal received by the wireless communication unit of the second power supply 800, and drive an executor to act; and the executor, configured to execute actions of turning on or turning off the electrical device.

The wireless signal may include the power-on instruction or the power-off instruction. Specifically, when the cloud forwards a power-on instruction to the wireless communication unit of the second power supply 800 by means of the first power supply 700, the wireless signal is the power-on instruction; and when the cloud forwards a power-off instruction to the wireless communication unit of the second power supply 800 by means of the first power supply 700, the wireless signal is the power-off instruction. It can be understood that when the cloud forwards other signals except for the power-on instruction and the power-off instruction to the wireless communication unit of the second power supply 800 by means of the first power supply 700, the wireless signal is the other signals.

In a feasible example, the executor is a circuit switch that is simple in structure and low in cost. Certainly, in other examples, the executor may be other structures capable of turning on or turning off the electrical device.

The power-on instruction is generated when the cloud receives a power-on request sent from the mobile communication device such that the second power supply 800 can be remotely controlled to turn on the electrical device without manual operation on a key of the second power supply 800.

### [Application scenario]

When a user carries a first power supply 700 and a second power supply 800 outdoors without WiFi network coverage, the first power supply 700 is connected to a cloud 300 by means of a cellular communication module, such as a 4G or 5G communication module; the second power supply is connected to the first power supply by means of a non-cellular communication module, such as a WiFi or Bluetooth communication module; and the user implements wireless communication with the cloud 300 by means of cellular data of a mobile phone, such as a 4G or 5G signal.

In this case, the user sends a power-on instruction to the cloud 300 by means of a wireless network through a mobile communication device, the cloud 300 sends the power-on instruction by means of the wireless network, the first power supply 700 sends the power-on instruction to the second power supply 800 by means of the connected wireless network, and a control unit of the second power supply 800 receives the power-on instruction by means of the connected wireless network, so as to control a battery 10 or a battery pack to turn on an electrical device.

With reference to FIG. 11, a schematic diagram illustrating that a combination of a first power supply and a second power supply is suitable for an outdoor vehicle-mounted refrigerator is shown, and the second power supply 800 (such as a remote control power supply 100c in the form of five batteries) supplies electric energy to the outdoor vehicle-mounted refrigerator 200c. In this case, the second power supply 800 is connected to the first power supply 700 by means of a non-cellular communication module, such as a WiFi or Bluetooth communication module; and the first power supply 700 is connected to a cloud 300 by means of a cellular communication module in the first power supply, such as a 4G or 5G communication module. A user can remotely control, by means of a terminal APP through the cloud, the remote control power supply 100 to be turned on such that the outdoor vehicle-mounted refrigerator 200c can be turned on to work.

In addition, a power-off instruction is generated when the cloud receives a power-off request sent from the mobile communication device such that the second power supply 800 can be remotely controlled to turn off the electrical device without manual operation on a key of the second power supply 800.

According to another aspect of the present disclosure, a control method for an electrical device is provided, and is configured to control the above electrical device 200 based on a combination of the first power supply 700 and the second power supply 800. In some examples, the control method for an electrical device 200 includes some or all of login steps, electricity usage steps, and power-off steps. Each step of the control method in the present disclosure will be described in detail below with reference to the drawings.

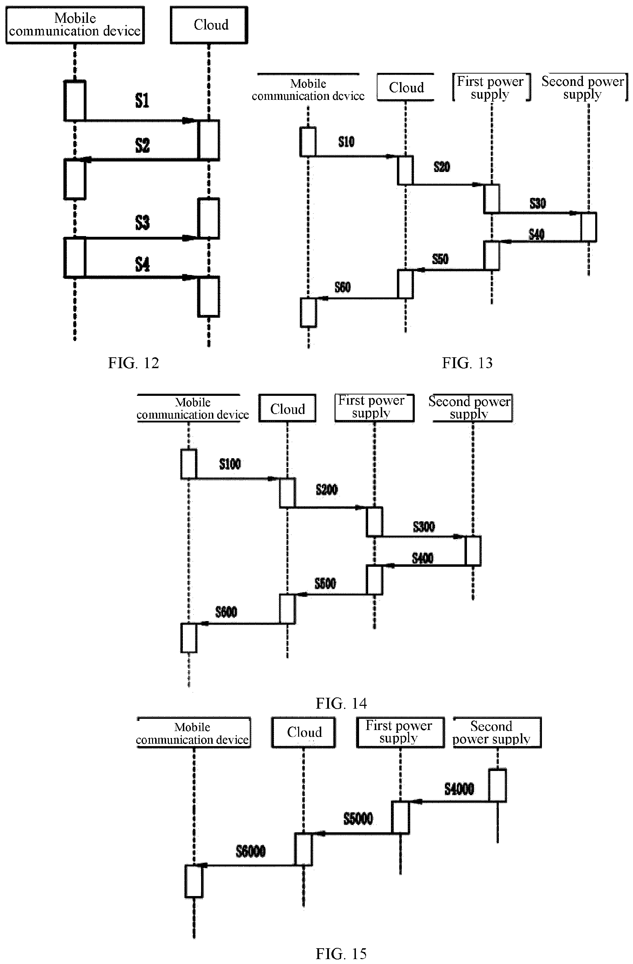

FIG. 12 shows a flowchart illustrating login steps in a control method for an electrical device.

A user is required to register online and fill in necessary user information when using an electrical device, a first power supply and a second power supply for the first time. Certainly, the user may download a user terminal application from a cloud to a mobile communication device by means of a network, and locally install the application to the mobile communication device; or the user terminal application has been installed on the mobile communication device of the user in advance. In login steps, the user starts the user terminal application on the mobile communication device and enables the mobile communication device to establish connection to the cloud.

Step S1: a mobile communication device running a user terminal application requests a verification code from a cloud 300; step S2: after receiving a verification code request sent from the mobile communication device of a user, the cloud 300 performs verification and confirmation, and sends the verification code to the mobile communication device in the manner of a message, an email, a voice call, etc.; step S3: after receiving the verification code sent from the cloud 300, the user inputs the verification code into the mobile communication device, and sends the verification code to the cloud 300 by means of the mobile communication device through a network; and step S4: the cloud 300 verifies the verification code and sends login confirmation information to the mobile communication device of the user.

FIG. 13 shows a flowchart illustrating controlling an electrical device to be turned on.

Step S10: a mobile communication device sends a power-on request to a cloud 300; step S20: after receiving the power-on request, the cloud 300 sends a power-on instruction to a first power supply 700; step S30: after receiving the power-on instruction, the first power supply 700 sends the power-on instruction to a second power supply 800 for power on; step S40: the second power supply 800 sends power-on status information to the first power supply 700; step S50: the first power supply 700 sends the received power-on status information to the cloud 300; and step S60: the cloud 300 feeds back the power-on status information to the mobile communication device.

Power-off steps will be described next.

With reference to FIG. 14, a flowchart illustrating power-off steps is shown, when a user is required to finish work of an electrical device, a power-off request is sent to a cloud 300 by means of a mobile communication device (step S100); after the cloud 300 receives the power-off request, a power-off instruction is sent to a first power supply (step S200); after the first power supply 700 receives the power-off instruction, the power-off instruction is sent to a second power supply 800 for power off (step S300); the second power supply 800 sends power-off status information to the first power supply 700 (step S400); after the first power supply 700 receives the instruction, the power-off status information of the second power supply 800 is sent to the cloud 300 (step S500); and in a situation that the cloud 300 confirms power off of the second power supply 800 based on the power-off status information of the second power supply 800, information confirming successful power off is sent to the mobile communication device, and current electricity usage is ended (step S600).

In addition, the power-off steps in the present disclosure may further be implemented by automatic power off of the electrical device. Specifically with reference to FIG. 15, a flowchart illustrating power-off steps is shown, after automatic power off of the electrical device, a second power supply 800 actively sends power-off status information to a first power supply 700 and reports the power-off status information to a cloud (steps S4000-S5000); and the cloud receives the power-off status information and feeds back the power-off status information to a mobile communication device such that a user can be reminded of power off of the electrical device (step S6000).

Specifically, a sensor, such as a temperature sensor is arranged in the electrical device 200. When the sensor detects that a temperature reaches a preset threshold value, a power supply circuit between the remote control power supply and the electrical device is automatically closed.

With regard to a mobile communication device, a control method for an electrical device according to an example of the present disclosure may include: (1) establishing wireless communication connection to a cloud (that is, login steps), where the cloud is in wireless communication connection to a first power supply 700, so as to be in wireless communication with a second power supply 800; and (2) sending, when a power-on request is obtained, the power-on request to the cloud, such that the cloud is triggered to send a power-on instruction to the first power supply 700, the first power supply 700 forwards the power-on instruction to the second power supply 800, the second power supply 800 is driven to turn on the electrical device, and the electrical device is in a power consuming state.

In some examples, the control method for an electrical device further includes: sending, when a power-off request is obtained, the power-off request to the cloud, such that the cloud is triggered to send a power-off instruction to the first power supply 700, the first power supply 700 forwards the power-off instruction to the second power supply 800, and the second power supply 800 is driven to turn off the electrical device. Further, the control method for an electrical device further includes: receiving information confirming successful power off sent from the cloud, where the information confirming successful power off is determined by the cloud based on power-off status information of the second power supply 800 sent from the second power supply 800 through the first power supply 700.

In some examples, the control method for an electrical device further includes: receiving information indicating automatic power off of the electrical device sent from the second power supply 800 and sequentially forwarded by the first power supply 700 and the cloud.

With regard to a cloud, the control method for an electrical device may include steps as follows: (1) establishing wireless communication connection to a mobile communication device and a second power supply 800; (2) generating, when a power-on request sent from the mobile communication device is received, a power-on instruction according to the power-on request; and (3) sending the power-on instruction to a first power supply 700, such that the first power supply 700 forwards the power-on instruction to the second power supply 800, the second power supply 800 is driven to turn on the electrical device, and the electrical device is in a power consuming state.

In some examples, the control method for an electrical device further includes: generating, when a power-off request sent from the mobile communication device is received, a power-off instruction according to the power-off request; and sending the power-off instruction to the first power supply 700, such the first power supply 700 forwards the power-off instruction to the second power supply 800, and the second power supply 800 is driven to turn off the electrical device. Further, the control method for an electrical device further includes: receiving power-off status information of the second power supply 800 forwarded by the first power supply 700; determining successful power off of the second power supply 800 according to the status information; and sending information confirming successful power off to the mobile communication device.

In some examples, the control method for an electrical device further includes: forwarding information indicating automatic power off of the electrical device sent from the second power supply 800 through the first power supply 700 to the mobile communication device.

With regard to a second power supply 800, the control method for an electrical device may include steps as follows: (1) establishing wireless communication connection to a first power supply 700, such that the second power supply 800 is in wireless communication with a cloud, where the cloud is in wireless communication connection to the first power supply 700 and a mobile communication device; (2) receiving a power-on instruction sent from the cloud by means of the first power supply 700, where the power-on instruction is generated by the cloud according to a power-on request sent from the mobile communication device; and (3) turning on the electrical device according to the power-on instruction, such that the electrical device is in a power consuming state.

In some examples, the control method for an electrical device further includes: receiving a power-off instruction sent from the cloud by means of the first power supply 700, where the power-off instruction is generated by the cloud according to a power-off request sent from the mobile communication device; and turning off the electrical device according to the power-off instruction. Further, the control method for an electrical device further includes: sending power-off status information of the second power supply 800 to the cloud by means of the first power supply 700, such that the cloud determines, according to the status information, whether successful power off of the second power supply 800 is achieved.

In some examples, the control method for an electrical device further includes: forwarding information indicating automatic power off of the electrical device to the mobile communication device sequentially by means of the first power supply 700 and the cloud during automatic power off of the second power supply 800 and the electrical device.

In addition, it is also worth noting that the above first power supply 700 may be further suitable for charging the second power supply 800, and when power of the second power supply 800 is insufficient, a user can use the first power supply 700 to supply electric energy to the second power supply 800.

Specifically, the above first power supply 700 is preferably in the form of an energy storage power station. That is, as shown in FIG. 3e, the first power supply includes at least one battery module, and the battery module includes a plurality of batteries 10. In this case, the battery or the battery pack is used as an energy storage power supply or an energy storage power station (also referred to as outdoor power supply).

According to the technology of an existing energy storage power station, a conventional energy storage power station or outdoor power supply has direct current (DC) output and alternating current (AC) output functions, and is provided with a car cigarette lighter (car charging port), a utility power charging port, a solar panel charging port, a bidirectional/two-way power delivery (PD) charging and discharging port, an intelligent display screen, etc. It can be seen therefrom that when the first power supply 700 is in the form of the energy storage power station, the first power supply will have conventional necessary functions and configurations of the existing energy storage power station.

In addition, the above first power supply 700 may be suitable for charging the second power supply 800, preferably a capacity (Ah) of the first power supply 700 is greater than that of the second power supply, or energy (WH) of the first power supply 700 is greater than that of the second power supply.

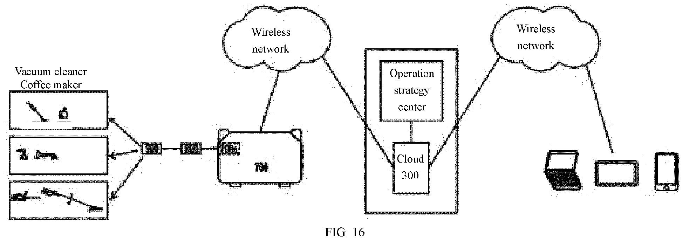

With reference to FIG. 16, a schematic module diagram of another control principle of a remote control power supply is shown, and the remote control power supply includes a first power supply 700 (the first power supply 700 shown in FIG. 16 may be referred to as an energy storage power supply), a second power supply 800 (the second power supply 800 shown in FIG. 16 may be referred to as a switching power supply), and a third power supply 900.

The first power supply 700 or the second power supply 800 includes a wireless communication unit, which is configured to be in wireless communication with a cloud 300, the wireless communication unit at least includes a communication module, and specifically, the communication module is a cellular (such as 2G/3G/4G/5G/NB-IOT/LTE-M) communication module.

It is worth particularly noting that a wireless cellular communication function of the first power supply 700 or the second power supply 800 may be activated after the first power supply 700 is electrically connected to the second power supply 800. Specifically, the first power supply 700 includes a mounting portion 700a suitable for being electrically connected to the second power supply 800, and the second power supply 800 is adapted, mounted and connected to the mounting portion 700a. In this case, the second power supply 800 is electrically connected to the first power supply 700 during positioning, mounting and connection. More specifically, the mounting portion is provided with another electric terminal electrically matching an electric terminal of the second power supply 800. In this case, a control unit of the first power supply 700 or the second power supply 800 detects an adaptive electrical signal of the first power supply and the second power supply, such that the wireless cellular communication function of the first power supply 700 or the second power supply 800 is activated.

Alternatively, the second power supply 800 is in signal connection to the first power supply 700 during positioning, mounting and connection. More specifically, the mounting portion is provided with another signal terminal electrically connected to a signal terminal of the second power supply 800. When the second power supply and the first power supply are mounted, matched and connected, signals of the second power supply and the first power supply perform handshake identification, and the wireless cellular communication function of the first power supply 700 or the second power supply 800 is activated.

The third power supply 900 also includes a wireless communication unit, which is configured to be in wireless communication with the first power supply 700 or the second power supply 800 of which a wireless cellular communication function is activated, the wireless communication unit at least includes a communication module, and specifically, the communication module is a non-cellular (such as WiFi/Bluetooth/ZigBee/Lora/Sigfox) communication module.

The third power supply 900 is connected to an electrical device 200 and is configured to supply electric energy to the electrical device 200. Similarly, the electrical device 200 may be an electric tool such as an electric drill, an electric angle grinder, an electric hammer, a sprayer and the like, may also be an electric garden tool such as a pruner, a grass trimmer, a chain saw and the like, may also be an electric household tool such as a vacuum cleaner, a coffee maker, an electric fan, a juicer and the like, and may also be other types of electrical apparatuses such as a glue gun, an air pump, an emergency lamp and the like. In general, the above electrical device 200 may generally refer to work devices using secondary batteries or battery packs (such as an energy storage power supply/an energy storage power station) as power sources. When the electrical device 200 works, a power supply is required to supply electric energy such that the electrical device can be driven to work.

The above third power supply 900 may be arranged in the electrical device 200 to supply electric energy for operation of the electrical device. The third power supply may be further arranged outside the electrical device 200. For instance, when the third power supply 900 is used as a specific energy storage power supply 100e, the energy storage power supply 100e is arranged outside and is connected to a power cord or a data cable of the electrical device 200 to supply power (as shown in FIG. 4e).

Certainly, the above third power supply 900 may be preferably mounted to the electrical device 200 in a freely mountable and dismountable manner. In this case, the third power supply 900 is suitable for usage of different types of electrical devices 200, that is, the third power supply 900 may be shared by the electric tool, the electric garden tool and the electric household tool.

For instance, a user has a third power supply 900 of 3.6 V, 12 V or 20 V, which may be used for the electric drill, the pruner, the vacuum cleaner or the emergency lamp. Such a third power supply 900 can satisfy different use scenarios of the user.

When the third power supply 900 is assembled and connected to the electrical device 200, the third power supply 900 is suitable for being mechanically and electrically connected to the electrical device 200, is fixed through mechanical connection, and supplies electric energy to the electrical device 200 through electrical connection.

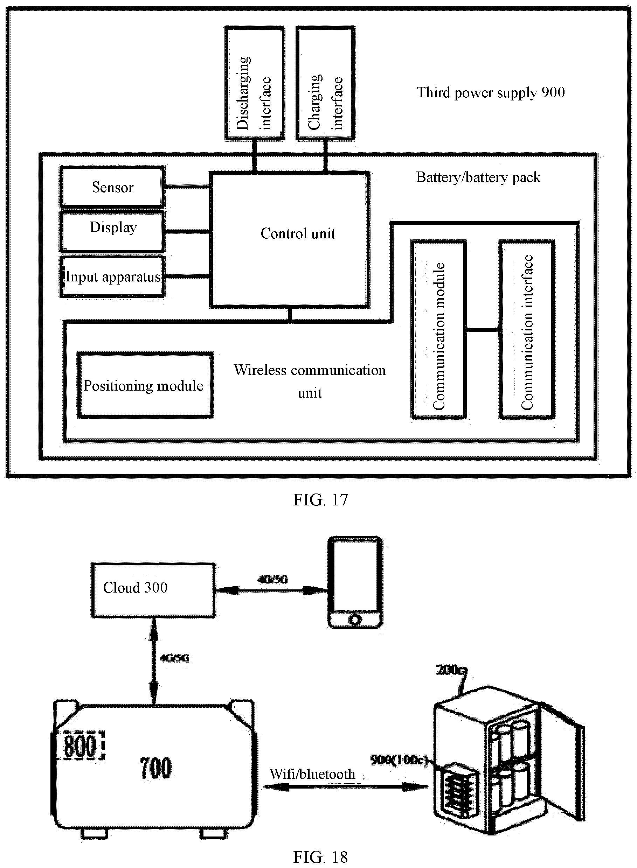

With reference to FIG. 17, a schematic diagram of functional modules of a third power supply 900 is shown. The second power supply 800 includes: a battery 10 or a battery pack, which is configured to supply electric energy to an electrical device 200; a wireless communication unit, which is configured to be in wireless communication with a first power supply 700 or a second power supply 800 of which a wireless cellular communication function is activated; and a control unit, which is configured to receive, by means of the wireless communication unit of the third power supply 900, a power-on instruction sent from the first power supply 700 or the second power supply 800 of which the wireless cellular communication function is activated, and drive the battery 10 or the battery pack to turn on the electrical device, according to the power-on instruction, such that the electrical device is in a power consuming state. It should be noted that the power-on instruction sent from the first power supply 700 or the second power supply 800 is actually sent from a cloud to the first power supply 700, that is, the first power supply 700 is configured to forward the power-on instruction sent from the cloud to the wireless communication unit of the third power supply 900.

The above battery 10 or the battery pack at least includes one battery such as one 21700 battery. Certainly, the battery 10 or the battery pack may also include three 21700 batteries connected in series, or five 21700 batteries connected in series to meet demands of electrical apparatuses of different voltage platforms. It is to be noted that the above description is merely an instance and is not limited to the application of the 21700 battery, and other types of batteries such as a 18650 battery can also be used.

Moreover, the above battery pack may further include at least one battery module, and the battery module includes a plurality of batteries connected in series or in parallel. Thus, the above battery pack is used as an energy storage power supply or an energy storage power station 100e.

In addition, the above third power supply 900 may at least include a first remote control power supply and a second remote control power supply connected in series or in parallel.

Specifically, the above third power supply 900 may be in various forms, for instance, a form of a single battery as shown in FIG. 3a, a form of three batteries as shown in FIG. 3b, a form of five batteries as shown in FIG. 3c, a form of multiple remote control power supplies combined with each other in which each of the multiple intelligent power supplies is in the form of a single battery (as shown in FIG. 3a) as shown in FIG. 3d, or a form of an energy storage power station as shown in FIG. 3e.

According to a particular example of the present disclosure, with reference to FIG. 17, a schematic diagram of functional modules of a third power supply 900 is shown, and the third power supply 900 includes a control unit, an input apparatus and a communication interface.

The input apparatus and the communication interface are in communication connection to the control unit respectively. The control unit includes a microprocessor configured to process data and a memory configured to store data. The control unit may be in communication with the first power supply 700 or the second power supply 800 of which a wireless cellular communication function is activated by means of the communication interface, and may also be in communication with a mobile communication device by means of the communication interface. A user may input an instruction or information into the control unit by means of the input apparatus, so as to cause the control unit to execute contents of the instruction or information.

The control unit of the third power supply 900 is connected, by means of the communication interface, to the first power supply 700 or the second power supply 800 of which a wireless cellular communication function is activated, the first power supply 700 or the second power supply 800 of which a wireless cellular communication function is activated establishes communication with the cloud by means of a wireless network (such as 4G or 5G), the cloud establishes communication with the mobile communication device by means of the wireless network, the mobile communication device controls the third power supply 900 by means of the cloud and the first power supply 700 or the second power supply 800 of which a wireless cellular communication function is activated, and the third power supply 900 regularly reports status information to the cloud by means of the first power supply 700 or the second power supply 800 of which a wireless cellular communication function is activated,. The status information includes one or more of electricity usage status information, power-off status information, position information, residual capacity, a temperature, and the like.

In addition, the third power supply 900 further includes a sensor and a display, and the sensor and the display are in communication connection to the control unit respectively. The sensor may collect status information (such as the temperature, the residual capacity, the position information and the like) of the battery or the battery pack in real time, and send the status information to the control unit. The display may display contents (such as the temperature, the residual capacity, the position information and the like) and/or an interface (such as an interactive interface) desired by the user as needed. Certainly, the display and the sensor are not necessary components of the second power supply.

In addition, the wireless communication unit of the above third power supply 900 is configured to be in wireless communication with the first power supply 700 or the second power supply 800 of which a wireless cellular communication function is activated, and in addition to the above communication module, the wireless communication unit may also include a positioning module, such as a GNSS module or a GPS module, which includes a GPS module or a Beidou module.

It is to be noted that the above control unit is further suitable for being configured to be connected to the first power supply 700 or the second power supply 800 of which a wireless cellular communication function is activated by means of the wireless communication unit of the third power supply 900, receive a power-off instruction sent from the cloud 300 by means of the first power supply 700 or the second power supply 800 of which a wireless cellular communication function is activated, and drive the battery or the battery pack to turn off the electrical device according to the power-off instruction. It should be noted that the power-off instruction sent from the cloud is forwarded to the wireless communication unit of the third power supply 900 by means of the first power supply 700 or the second power supply 800 of which a wireless cellular communication function is activated.

The control unit of the third power supply 900 includes: an electronic controller, configured to identify a wireless signal received by the wireless communication unit of the third power supply 900, and drive an executor to act; and the executor, configured to execute actions of turning on or turning off the electrical device.

The wireless signal may include the power-on instruction or the power-off instruction. Specifically, when the cloud forwards a power-on instruction to the wireless communication unit of the third power supply 900 by means of the first power supply 700 or the second power supply 800 of which a wireless cellular communication function is activated, the wireless signal is the power-on instruction; and when the cloud forwards a power-off instruction to the wireless communication unit of the third power supply 900 by means of the first power supply 700 or the second power supply 800 of which a wireless cellular communication function is activated, the wireless signal is the power-off instruction. It can be understood that when the cloud forwards other signals except for the power-on instruction and the power-off instruction to the wireless communication unit of the third power supply 900 by means of the first power supply 700 or the second power supply 800 of which a wireless cellular communication function is activated, the wireless signal is the other signals.

In a feasible example, the executor is a circuit switch that is simple in structure and low in cost. Certainly, in other examples, the executor may be other structures capable of turning on or turning off the electrical device.

The power-on instruction is generated when the cloud receives a power-on request sent from the mobile communication device such that the remote control power supply can be remotely controlled to turn on the electrical device without manual operation on a key of the remote control power supply.

### [Application scenario]

When a user carries a first power supply 700 and a second power supply 800 outdoors without WiFi network coverage, the second power supply 800 is mounted and connected to the first power supply 700; a wireless cellular communication function of the first power supply 700 or the second power supply 800 is activated; the first power supply 700 or the second power supply 800 of which a wireless cellular communication function is activated is connected to a cloud 300 by means of a cellular communication module, such as a 4G or 5G communication module; the third power supply 900 is connected to the first power supply 700 or the second power supply 800 of which a wireless cellular communication function is activated by means of a non-cellular communication module, such as a WiFi or Bluetooth communication module; and the user implements wireless communication with the cloud 300 by means of cellular data of a mobile phone, such as a 4G or 5G signal.

In this case, the user sends a power-on instruction to the cloud 300 by means of a wireless network through a mobile communication device, the cloud 300 sends the power-on instruction by means of the wireless network, the first power supply 700 or the second power supply 800 of which a wireless cellular communication function is activated sends the power-on instruction to the third power supply 900 by means of the connected wireless network, and a control unit of the third power supply 900 receives the power-on instruction by means of the connected wireless network, so as to control a battery 10 or a battery pack to turn on an electrical device.

With reference to FIG. 18, a schematic diagram illustrating that a combination of a first power supply/a second power supply and a third power supply is suitable for an outdoor vehicle-mounted refrigerator is shown, and the third power supply 900 (such as a remote control power supply 100c in the form of five batteries) supplies electric energy to the outdoor vehicle-mounted refrigerator 200c. In this case, the third power supply 900 is connected to the first power supply 700 or the second power supply 800 of which a wireless cellular communication function is activated by means of a non-cellular communication module, such as a WiFi or Bluetooth communication module; and the first power supply 700 or the second power supply 800 of which a wireless cellular communication function is activated is connected to the cloud 300 by means of a cellular communication module in the first power supply or the second power supply, such as a 4G or 5G communication module. A user can remotely control, by means of a terminal APP through the cloud, the remote control power supply 100 to be turned on such that the outdoor vehicle-mounted refrigerator 200c can be turned on to work.

In addition, a power-off instruction is generated when the cloud receives a power-off request sent from the mobile communication device such that the remote control power supply can be remotely controlled to turn off the electrical device without manual operation on a key of the remote control power supply.

According to another aspect of the present disclosure, a control method for an electrical device is provided, and is configured to control the above electrical device 200 based on a combination of the first power supply 700/the second power supply 800 and the third power supply 900. In some examples, the control method for an electrical device 200 includes some or all of login steps, electricity usage steps, and power-off steps. Each step of the control method in the present disclosure will be described in detail below with reference to the drawings.

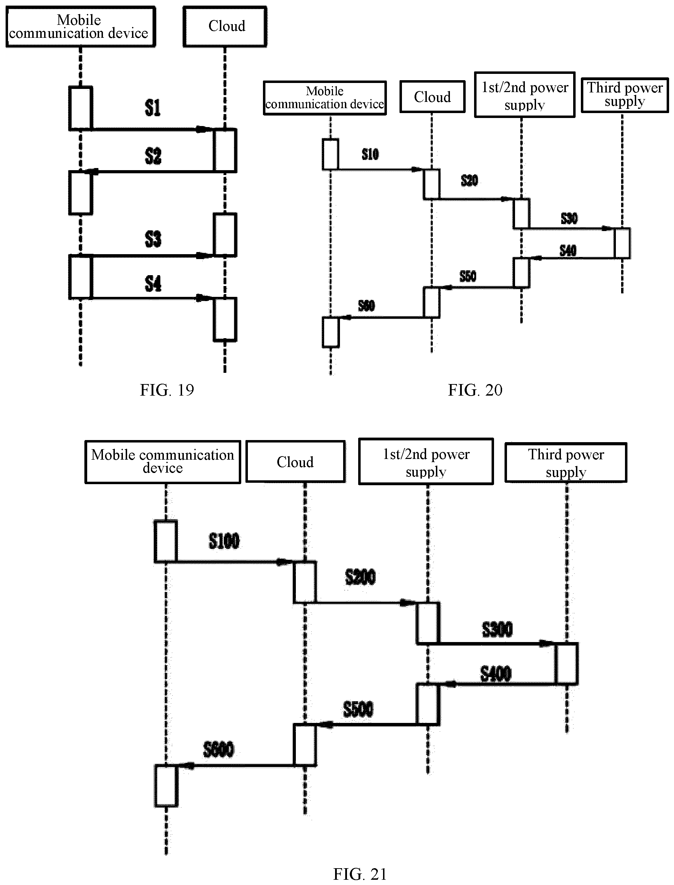

FIG. 19 shows a flowchart illustrating login steps in a control method for an electrical device.

A user is required to register online and fill in necessary user information when using an electrical device, a first power supply/a second power supply and a third power supply for the first time. Certainly, the user may download a user terminal application from a cloud to a mobile communication device by means of a network, and locally install the application to the mobile communication device; or the user terminal application has been installed on the mobile communication device of the user in advance. In login steps, the user starts the user terminal application on the mobile communication device and enables the mobile communication device to establish connection to the cloud.

Step S1: a mobile communication device running a user terminal application requests a verification code from a cloud 300; step S2: after receiving a verification code request sent from the mobile communication device of a user, the cloud 300 performs verification and confirmation, and sends the verification code to the mobile communication device in the manner of a message, an email, a voice call, etc.; step S3: after receiving the verification code sent from the cloud 300, the user inputs the verification code into the mobile communication device, and sends the verification code to the cloud 300 by means of the mobile communication device through a network; and step S4: the cloud 300 verifies the verification code and sends login confirmation information to the mobile communication device of the user.

FIG. 20 shows a flowchart illustrating controlling an electrical device to be turned on.

Step S10: a mobile communication device sends a power-on request to a cloud 300; step S20: after receiving the power-on request, the cloud 300 sends a power-on instruction to a first power supply 700 or a second power supply 800 of which a wireless cellular communication function is activated; step S30: after receiving the power-on instruction, the first power supply 700 or the second power supply 800 of which a wireless cellular communication function is activated sends the power-on instruction to a third power supply 900 for power on; step S40: the third power supply 900 sends power-on status information to the first power supply 700 or the second power supply 800 of which a wireless cellular communication function is activated; step S50: the first power supply 700 or the second power supply 800 of which a wireless cellular communication function is activated sends the received power-on status information to the cloud 300; and step S60: the cloud 300 feeds back the power-on status information to the mobile communication device.

Power-off steps will be described next.

With reference to FIG. 21, a flowchart illustrating power-off steps is shown, when a user is required to finish work of an electrical device, a power-off request is sent to a cloud 300 by means of a mobile communication device (step S100); after the cloud 300 receives the power-off request, a power-off instruction is sent to a first power supply 700 or a second power supply 800 of which a wireless cellular communication function is activated (step S200); after the first power supply 700 or the second power supply 800 of which a wireless cellular communication function is activated receives the power-off instruction, the power-off instruction is sent to a third power supply 900 for power off (step S300); power-off status information is sent by the third power supply 900 to the first power supply 700 or the second power supply 800 of which a wireless cellular communication function is activated (step S400); the power-off status information of the third power supply 900 is sent to the cloud 300 after the first power supply 700 or the second power supply 800 of which a wireless cellular communication function is activated receives the instruction (step S500); and in a situation that the cloud 300 confirms power off of the third power supply 900 based on the power-off status information of the third power supply 900, information confirming successful power off is sent to a mobile communication device, and current electricity usage is ended (step S600).

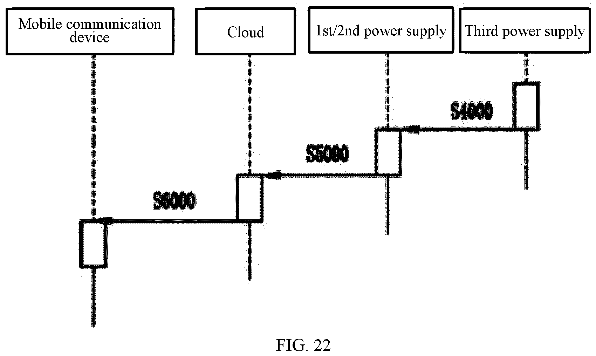

In addition, the power-off steps in the present disclosure may further be implemented by automatic power off of the electrical device. Specifically with reference to FIG. 22, a flowchart illustrating power-off steps is shown, after automatic power off of the electrical device, a third power supply 900 actively sends power-off status information to a first power supply 700 or a second power supply 800 of which a wireless cellular communication function is activated and reports the power-off status information to a cloud (steps S4000-S5000); and the cloud receives the power-off status information and feeds back the power-off status information to a mobile communication device such that a user can be reminded of power off of the electrical device (step S6000).

Specifically, a sensor, such as a temperature sensor is arranged in the electrical device 200. When the sensor detects that a temperature reaches a preset threshold value, a power supply circuit between the remote control power supply and the electrical device is automatically closed.

With regard to a mobile communication device, a control method for an electrical device according to an example of the present disclosure may include: (1) establishing wireless communication connection to a cloud (that is, login steps), where the cloud is in wireless communication connection to the remote control power supply; and (2) sending, when a power-on request is obtained, the power-on request to the cloud, such that the cloud is triggered to send a power-on instruction to a first power supply 700 or a second power supply 800 of which a wireless cellular communication function is activated, the first power supply 700 or the second power supply 800 of which a wireless cellular communication function is activated forwards the power-on instruction to a third power supply 900, the third power supply 900 is driven to turn on the electrical device, and the electrical device is in a power consuming state.

In some examples, the control method for an electrical device further includes: sending, when a power-off request is obtained, the power-off request to the cloud, such that the cloud is triggered to send a power-off instruction to the first power supply 700 or the second power supply 800 of which a wireless cellular communication function is activated, the first power supply 700 or the second power supply 800 of which a wireless cellular communication function is activated forwards the power-off instruction to the third power supply 900, and the third power supply 900 is driven to turn off the electrical device. Further, the control method for an electrical device further includes: receiving information confirming successful power off sent from the cloud, where the information confirming successful power off is determined by the cloud based on power-off status information of the third power supply 900 sent from the remote control power supply by means of the first power supply 700 or the second power supply 800 of which a wireless cellular communication function is activated.

In some examples, the control method for an electrical device further includes: receiving information indicating automatic power off of the electrical device sent from the remote control power supply and sequentially forwarded by the first power supply 700 or the second power supply 800 of which a wireless cellular communication function is activated and the cloud.

With regard to a cloud, the control method for an electrical device may include steps as follows: (1) establishing wireless communication connection to a mobile communication device and a remote control power supply; (2) generating, when a power-on request sent from the mobile communication device is received, a power-on instruction according to the power-on request; and (3) sending the power-on instruction to a first power supply 700 or a second power supply 800 of which a wireless cellular communication function is activated, such that the first power supply 700 or the second power supply 800 of which a wireless cellular communication function is activated forwards the power-on instruction to a third power supply 900, the third power supply 900 is driven to turn on the electrical device, and the electrical device is in a power consuming state.

In some examples, the control method for an electrical device further includes: generating, when a power-off request sent from the mobile communication device is received, a power-off instruction according to the power-off request; and sending the power-off instruction to the first power supply 700 or the second power supply 800 of which a wireless cellular communication function is activated, such that the first power supply 700 or the second power supply 800 of which a wireless cellular communication function is activated forwards the power-on instruction to the third power supply 900, and the third power supply 900 is driven to turn off the electrical device. Further, the control method for an electrical device further includes: receiving power-off status information of the third power supply 900 forwarded by the first power supply 700 or the second power supply 800 of which a wireless cellular communication function is activated; determining successful power off of the third power supply 900 according to the status information; and sending information confirming successful power off to the mobile communication device.

In some examples, the control method for an electrical device further includes: forwarding information indicating automatic power off of the electrical device sent from the third power supply 900 through the first power supply 700 or the second power supply 800 of which a wireless cellular communication function is activated to the mobile communication device.

With regard to a remote control power supply, the control method for an electrical device may include steps as follows: (1) establishing wireless communication connection to a first power supply 700 or a second power supply 800 of which a wireless cellular communication function is activated, such that a third power supply 900 is in wireless communication with a cloud, where the cloud is in wireless communication connection to the first power supply 700 or the second power supply 800 of which a wireless cellular communication function is activated and a mobile communication device; (2) receiving a power-on instruction sent from the cloud by means of the first power supply 700 or the second power supply 800 of which a wireless cellular communication function is activated, where the power-on instruction is generated by the cloud according to a power-on request sent from the mobile communication device; and (3) turning on the electrical device according to the power-on instruction, such that the electrical device is in a power consuming state.

In some examples, the control method for an electrical device further includes: receiving a power-off instruction sent from the cloud by means of the first power supply 700 or the second power supply 800 of which a wireless cellular communication function is activated, where the power-off instruction is generated by the cloud according to a power-off request sent from the mobile communication device; and turning off the electrical device according to the power-off instruction. Further, the control method for an electrical device further includes: sending power-off status information of the third power supply 900 to the cloud by means of the first power supply 700 or the second power supply 800 of which a wireless cellular communication function is activated, such that the cloud determines, according to the status information, whether successful power off of the remote control power supply is achieved.

In some examples, the control method for an electrical device further includes: forwarding information indicating automatic power off of the electrical device to the mobile communication device sequentially by means of the first power supply 700 or the second power supply 800 of which a wireless cellular communication function is activated and the cloud during automatic power off of the third power supply 900 and the electrical device.

It is worth particularly noting that, with reference to FIG. 16 and FIG. 18, the second power supply 800 preferably includes a wireless communication unit, which is configured to be in wireless communication with the cloud 300, the wireless communication unit at least includes a communication module, and specifically, the communication module is a cellular (such as 2G/3G/4G/5G/NB-IOT/LTE-M) communication module. A wireless cellular communication function of the second power supply 800 may be activated after the second power supply 800 is electrically connected to the first power supply 700.

Specifically, the first power supply 700 includes a mounting portion 700a suitable for being electrically connected to the second power supply 800, and the second power supply 800 is adapted, mounted and connected to the mounting portion 700a. In this case, the second power supply 800 is electrically connected to the first power supply 700 during positioning, mounting and connection. More specifically, the mounting portion is provided with another electric terminal electrically matching an electric terminal of the second power supply 800. In this case, a control unit of the second power supply 800 detects an adaptive electrical signal of the first power supply and the second power supply, such that the wireless cellular communication function of the second power supply 800 is activated.

Alternatively, the second power supply 800 is in signal connection to the first power supply 700 during positioning, mounting and connection. More specifically, the mounting portion 700a is provided with another signal terminal electrically connected to a signal terminal of the second power supply 800. For convenience of description, the signal terminal of the mounting portion 700a may be referred to as a first signal terminal, and the signal terminal of the second power supply 800 may be referred to as a second signal terminal. When the two terminals (that is, the first signal terminal and the second signal terminal) are mounted, matched and connected, signals of the second power supply and the first power supply perform handshake identification, and the wireless cellular communication function of the second power supply 800 is activated.

In this case, it can be understood that a size of the second power supply 800 is much less than that of the first power supply 700, and the second power supply 800 is most preferably in the form of a single 21700 battery, so as to have a small size, and is convenient to carry by a user. Moreover, it can be understood that the second power supply 800 is assembled to the first power supply 700, and the first power supply 700 may supply power to the second power supply 800, that is, charge the second power supply 800.

In this case, specifically, the above first power supply 700 is preferably in the form of an energy storage power station. That is, as shown in FIG. 3e, the first power supply includes at least one battery module, and the battery module includes a plurality of batteries 10. In this case, the battery or the battery pack is used as an energy storage power supply or an energy storage power station (also referred to as outdoor power supply).

According to the technology of an existing energy storage power station, a conventional energy storage power station or outdoor power supply has DC output and AC output functions, and is provided with a car cigarette lighter (car charging port), a utility power charging port, a solar panel charging port, a bidirectional PD charging and discharging port, an intelligent display screen, etc. It can be seen therefrom that when the first power supply 700 is in the form of the energy storage power station, the first power supply will have conventional necessary functions and configurations of the existing energy storage power station.

The above first power supply 700 may charge the second power supply 800, preferably a capacity (Ah) of the first power supply 700 is greater than that of the second power supply, or energy (WH) of the first power supply 700 is greater than that of the second power supply.

In addition, the second power supply 800 most preferably in the form of a single 21700 battery after being activated for the first time may be taken out from the mounting portion 700a of the first power supply 700. In this case, the second power supply 800 may also be used as an accompanying WiFi apparatus.

Certainly, the second power supply 800 may be in other forms, such as a form of three batteries as shown in FIG. 3b, a form of five batteries as shown in FIG. 3c, a form of multiple remote control power supplies combined with each other in which each of the multiple intelligent power supplies is in the form of a single battery (as shown in FIG. 3a) as shown in FIG. 3d, a form of an energy storage power station as shown in FIG. 3e.

An example of the present disclosure further provides a remote control power supply for an electrical device. The remote control power supply is configured to receive, by means of a wireless network, a control instruction sent from a mobile communication device; and the remote control power supply may include: a battery or a battery pack, which is configured to supply electric energy to the electrical device; a wireless communication unit, which is configured to be in wireless communication with the mobile communication device; and a control unit, which is configured to receive, by means of the wireless communication unit, the control instruction sent from the mobile communication device; where the control instruction at least includes a power-on instruction, and the control unit is configured to drive, according to the power-on instruction, the battery or the battery pack to turn on the electrical device.

The remote control power supply in the example of the present disclosure is capable of being in wireless communication with the mobile communication device, that is, the remote control power supply has networking and communication functions such that a user can remotely control the remote control power supply so as to turn on the electrical device, control of the remote control power supply is more intelligent, and user experience is improved.

The control instruction may further include a power-off instruction, a parameter setting instruction, and/or a parameter reading instruction. For instance, in some examples, the control instruction includes the power-off instruction, and the control unit is configured to drive the battery or the battery pack to turn off the electrical device according to the power-off instruction. In some other examples, the control instruction includes the parameter setting instruction, and the control unit is configured to set parameters of the remote control power supply and/or the electrical device according to the parameter setting instruction. For instance, the control unit may set parameters such as an output current and/or an output voltage of the remote control power supply and/or set a working mode and a working parameter of the electrical device according to the parameter setting instruction. In some other examples, the control instruction includes the parameter reading instruction, the control unit is configured to obtain status information of the remote control power supply according to the parameter reading instruction, and send the status information of the remote control power supply to the mobile communication device by means of the wireless communication unit. The status information of the remote control power supply may include a situation that the remote control power supply executes the control instruction (such as whether the remote control power supply successfully executes the control instruction), and the status information of the remote control power supply may further include status information such as power and/or temperature of the remote control power supply.

In some examples, the wireless communication unit of the remote control power supply is indirectly in wireless communication connection to the mobile communication device. As shown in FIG. 1, the wireless communication unit of the remote control power supply 100 is in wireless communication connection to the mobile communication device by means of the cloud 300. As shown in FIG. 9, the wireless communication unit of the second power supply 800 (the second power supply 800 is the remote control power supply) is in wireless communication connection to the mobile communication device sequentially by means of the first power supply 700 and the cloud 300. As shown in FIG. 16, the wireless communication unit of the third power supply 900 (the third power supply 900 is the remote control power supply) is in wireless communication connection to the mobile communication device sequentially by means of the second power supply 800 or the first power supply 700 and the cloud 300.

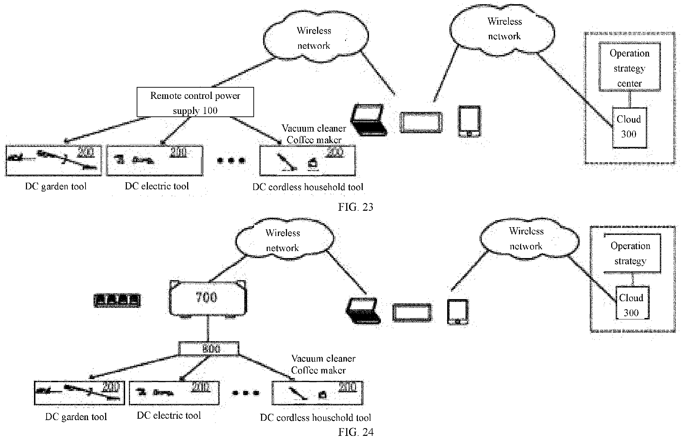

In still other examples, the wireless communication unit of the remote control power supply is directly in wireless communication connection to the mobile communication device. As shown in FIG. 23, the remote control power supply 100 for the electrical device 200 is configured to supply electric energy to the electrical device 200 and receive the control instruction sent from the mobile communication device by means of the wireless network.

The remote control power supply 100 includes a wireless communication unit, the wireless communication unit at least includes a wireless communication module, the wireless communication module may include a cellular (such as 2G/3G/4G/5G/NB-IOT/LTE-M) communication module, a non-cellular (such as WiFi/Bluetooth/ZigBee/Lora/Sigfox) communication module, or the cellular and non-cellular communication modules.

Functional modules of the remote control power supply 100 are shown in FIG. 2.

The remote control power supply 100 is directly in wireless communication connection to the mobile communication device, and is configured to receive a control instruction sent from the mobile communication device, and feed back status information of the remote control power supply to the mobile communication device.

As shown in FIG. 24, the remote control power supply may include a first power supply 700 and a second power supply 800, and is composed of the first power supply 700 and the second power supply 800 connected in series or in parallel. The second power supply 800 is connected to the electrical device 200, and is configured to supply electric energy to the electrical device 200.

The first power supply 700 includes a wireless communication unit, which is configured to be in wireless communication with a mobile communication device, the wireless communication unit at least includes a communication module, and specifically, the communication module may include a cellular (such as 2G/3G/4G/5G/NB-IOT/LTE-M) communication module, a non-cellular (such as WiFi/Bluetooth/ZigBee/Lora/Sigfox) communication module, or the cellular and non-cellular communication modules.

Functional modules of the second power supply 800 are shown in FIG. 10.

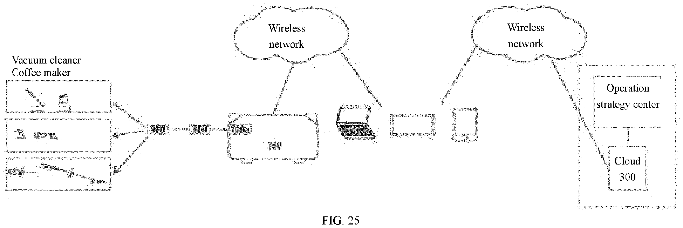

As shown in FIG. 25, the remote control power supply may include a first power supply 700, a second power supply 800 and a third power supply 900. The third power supply 900 is connected to an electrical device 200, and is configured to supply electric energy to the electrical device 200.

The first power supply 700 or the second power supply 800 includes a wireless communication unit, which is configured to be in wireless communication with a mobile communication device, the wireless communication unit at least includes a communication module, and specifically, the communication module is a cellular (such as 2G/3G/4G/5G/NB-IOT/LTE-M) communication module.

Functional modules of the third power supply 900 are shown in FIG. 17.

In some examples, a wireless communication unit of the remote control power supply is further in wireless communication with a cloud by means of the mobile communication device. As shown in FIG. 23, the wireless communication unit of the remote control power supply 100 is further in wireless communication with the cloud 300 by means of the mobile communication device. As shown in FIG. 24, the wireless communication unit of the first power supply 700 is further in wireless communication with the cloud 300 by means of the mobile communication device. As shown in FIG. 25, the first power supply 700 or the second power supply 800 is further in wireless communication connection to the cloud 300 by means of the mobile communication device. In the example, after the control unit of the remote control power supply obtains status information of the remote control power supply, the status information is sent to the mobile communication device by means of the wireless communication unit, and the status information is forwarded to the cloud by the mobile communication device, such that the status information is stored or classified and stored by means of the cloud.

It should be noted that no matter the wireless communication unit of the remote control power supply is indirectly or directly in wireless communication connection to the mobile communication device, control methods for the electrical device are identical, reference is made to the description of the corresponding part in the above examples for details, and repeated content will not be described.

According to another aspect of the present disclosure, a power supply assembly is provided. The power supply assembly may include the remote control power supply in the above examples.

In the example as shown in FIG. 1, the remote control power supply 100 is directly in wireless communication with the cloud 300 by means of a wireless network, and the control unit of the remote control power supply 100 is suitable for being configured to receive, by means of the wireless communication unit of the remote control power supply 100, a power-on instruction sent from the cloud 300, and drive, according to the power-on instruction, the battery 10 or the battery pack to turn on the electrical device, such that the electrical device is in a power consuming state.

The control unit of the remote control power supply 100 is further suitable for being configured to receive, by means of the wireless communication unit of the remote control power supply 100, a power-off instruction sent from the cloud 300, and drive, according to the power-off instruction, the battery or the battery pack to turn off the electrical device, such that the electrical device is in a turn-off state.

In the example shown in FIG. 1, control instructions such as the power-on instruction and the power-off instruction are forwarded by the mobile communication device to the remote control power supply 100 by means of the cloud.

In the example as shown in FIG. 9, the remote control power supply is the second power supply 800, the power supply assembly further includes the first power supply 700 (the first power supply 700 may be further referred to as an energy storage power supply), and the first power supply 700 is configured to be in wireless communication connection to the cloud and in wireless communication connection to the wireless communication unit of the second power supply 800, such that the second power supply 800 is in wireless communication with the cloud 300; where the first power supply 700 is capable of charging the second power supply 800. In the example, the second power supply 800 is in wireless communication with the cloud 300 through switching of the first power supply 700.

In the example shown in FIG. 9, control instructions such as a power-on instruction and a power-off instruction are forwarded by the mobile communication device to the first power supply 700 by means of the cloud, and then the control instructions are forwarded to the second power supply 800 by the first power supply 700.

In the example as shown in FIG. 16, the remote control power supply is the third power supply 900, and the power supply assembly may further include the first power supply 700 (the first power supply 700 may be further referred to as an energy storage power supply) and the second power supply 800 (the second power supply 800 may be further referred to as a switching power supply). When the first power supply 700 is electrically connected to the second power supply 800, a wireless communication function of the first power supply 700 or the second power supply 800 is activated, such that the first power supply 700 or the second power supply 800 is in wireless communication connection to the cloud 300, the first power supply 700 or the second power supply 800 is in wireless communication connection to the wireless communication unit of the third power supply 900, and the third power supply 900 is in wireless communication with the cloud 300.

In the example shown in FIG. 16, control instructions such as a power-on instruction and a power-off instruction are forwarded by the mobile communication device to the first power supply 700 or the second power supply 80 by means of the cloud, and then the control instructions are forwarded to the third power supply 900 by the first power supply 700 or the second power supply 80.

As shown in FIG. 16, the first power supply 700 includes the mounting portion 700a, and the second power supply 800 is adapted, mounted and connected to the mounting portion 700a, so that the second power supply 800 is electrically connected to the first power supply 700.

The mounting portion is provided with the first signal terminal, and the second power supply 800 includes the second signal terminal. When the second power supply 800 is positioned and mounted to the mounting portion, the first signal terminal and the second signal terminal are mounted, matched and connected, such that the second power supply 800 is electrically connected to the first power supply 700.

After the wireless communication function of the first power supply 700 or the second power supply 800 is activated, if the second power supply 800 is taken down from the first power supply 700, the second power supply 800 is capable of being used as an accompanying wireless network.

In addition, in the examples shown in FIG. 9 or FIG. 16, the first power supply 700 is in wireless communication with the cloud 300 based on a cellular network, and the first power supply 700 is in wireless communication with the wireless communication unit of the third power supply 900 based on a non-cellular network.

In the example as shown in FIG. 23, the remote control power supply 100 is directly in wireless communication with the mobile communication device by means of a wireless network. Control instructions such as the power-on instruction and the power-off instruction are directly sent to the remote control power supply 100 by the mobile communication device.

In the example as shown in FIG. 24, the first power supply 700 is directly in wireless communication with the mobile communication device by means of a wireless network. Control instructions such as a power-on instruction and a power-off instruction are directly sent to the first power supply 700 by the mobile communication device, and then the control instructions are forwarded to the second power supply 800 by the first power supply 700.

In the example shown in FIG. 25, control instructions such as a power-on instruction and a power-off instruction are forwarded by the mobile communication device to the first power supply 700 or the second power supply 80 by means of the cloud, and then the control instructions are forwarded to the third power supply 900 by the first power supply 700 or the second power supply 80.

Another aspect of an example of the present disclosure provides an electrical device. The electrical device may include: an electrical assembly; and the power supply assembly described in any one of the above examples, where the power supply assembly is configured to supply electric energy to the electrical assembly.

In some examples, the electrical device further includes a housing, where the remote control power supply is detachably mounted to the housing.

The remote control power supply is suitable for electric tools such as an electric garden tool and/or an electric household tool and other electrical assemblies.

Another aspect of an example of the present disclosure provides an electrical system. The electrical system includes: a mobile communication device; a cloud, which is in wireless communication connection to the mobile communication device; and the power supply assembly described in any one of the above examples. In some examples, the remote control power supply of the power supply assembly is in wireless communication connection to the cloud; and the mobile communication device is configured to send a power-on request to the cloud, such that the cloud is triggered to send a power-on instruction to the remote control power supply. In some other examples, the remote control power supply of the power supply assembly is directly in wireless communication connection to the mobile communication device, and the mobile communication device directly sends control instructions such as the power-on instruction to the remote control power supply.

In addition, it is worth mentioning that the above remote control power supply 100 is further suitable for adjusting parameters.

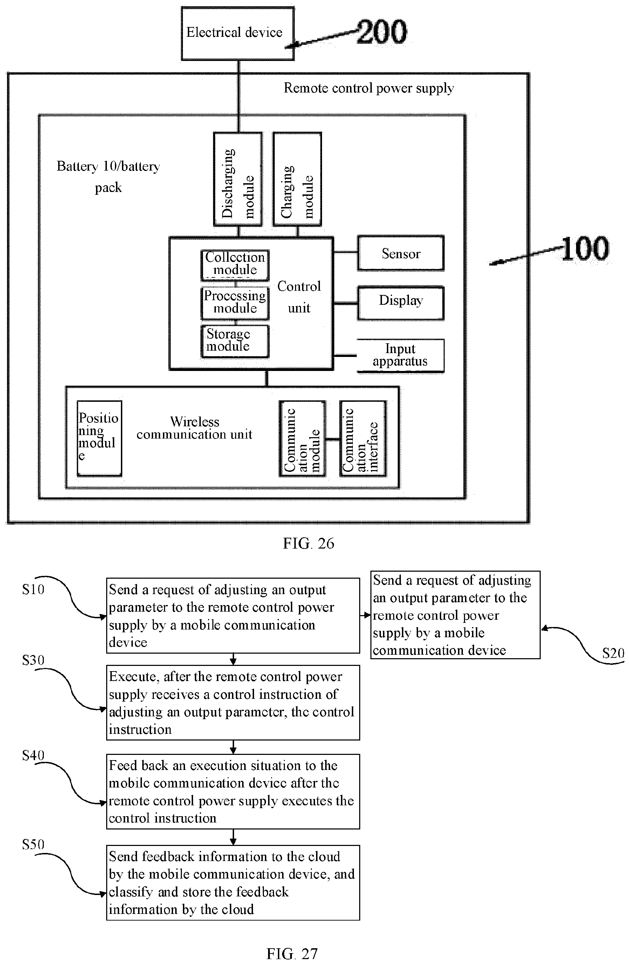

Specifically, with reference to FIG. 26, a schematic diagram of functional modules of a remote control power supply 100 is shown. The remote control power supply 100 includes: a battery 10 or a battery pack, which is configured to supply electric energy to the electrical device 200; a wireless communication unit, which is configured to be in wireless communication with the cloud 300; and a control unit, which is configured to receive a control instruction of adjusting an output parameter sent from the mobile communication device by means of the wireless communication unit, and adjust the output parameter of the remote control power supply according to the control instruction.

The above output parameter includes one or more of output power, output time, an output current direction and an output mode. For instance, when an electric fan is remotely controlled, the output parameter is basically the output power, and a wind speed of the electric fan may be adjusted by adjusting the output power. For another instance, when a vacuum cleaner is remotely controlled, the output parameter may also be the output power, and a suction force of the vacuum cleaner may be adjusted by adjusting the output power. For another instance, when an electric drill is remotely controlled, the adjustment parameter may be the output power and the output current direction, a rotation speed of the electric drill may be adjusted by adjusting the output power, and a rotation direction of the electric drill may be adjusted by adjusting the output current direction. For another instance, when a coffee maker is remotely controlled, the output parameter of the coffee maker may be the output mode, and the output mode may be set according to a flavor of coffee, such as American flavor, latte flavor, Italian concentrated flavor and the like.

The above control unit includes: a collection module, which is configured to collect a current output parameter of the remote control power supply, collect a wireless communication signal and send the collected data and/or signal to a processing module; the processing module, which is configured to compare the current output parameter collected by the collection module with an output parameter to be adjusted sent from the mobile communication device; if a comparison result is consistence, the output parameter is not required to be adjusted, and the result is fed back to the mobile communication device; if the comparison result is inconsistence, the current output parameter is adjusted to the output parameter to be adjusted, and an adjustment result is fed back to the mobile communication device; and a storage module, which is configured to store the current output parameter collected by the collection module, and store the above comparison result when there is no network.

The above mobile communication device at least includes a display module, which is configured to display an adjustment interface or a feedback interface, and configured for a user to conveniently input a control instruction.

In addition, as described above, the remote control power supply further includes a sensor and a display, and the sensor and the display are in communication connection to the control unit respectively. The sensor may collect status information (such as a temperature, residual capacity, position information and the like) of the battery or the battery pack in real time and send the status information to the control unit. The display may display contents (such as the temperature, the residual capacity, the position information and the like) and/or an interface (such as an interactive interface) desired by the user as needed. Certainly, the display and the sensor are not necessary components of the remote control power supply.

In addition, in addition to the above communication module, the above wireless communication unit may also include a positioning module, such as a GNSS module or a GPS module, which includes a GPS module or a Beidou module.

The control unit includes: an electronic controller, which is configured to identify a wireless signal received by the wireless communication unit, and drive an executor to act; and an executor, which is configured to execute an action of adjusting the output parameter.

In a feasible example, the executor is a circuit switch that is simple in structure and low in cost. Certainly, in other examples, the executor may be other structures capable of adjusting the output parameter.

It should be noted herein that the above mobile communication device at least includes a communication apparatus, a processing apparatus and a memory. The communication apparatus is configured to send or receive a signal by means of a wired or wireless network; the processing apparatus includes an application processing part and a radio frequency/digital signal processor; and the memory is configured to process or store the signal in a physical storage status; and the mobile communication device is an intelligent terminal, such as a mobile phone, a pad, a notebook and the like.

The above cloud at least includes one or more central processing units, one or more memories and/or mass storage devices; and one or more wired or wireless network interfaces.

### [Application scenario 1]

When a remote control power supply 100 is in a WiFi network coverage environment, such as an indoor home environment, the remote control power supply 100 is connected to a home WiFi network by means of a non-cellular network communication module, such as a WiFi communication module, and is in wireless communication with a mobile communication device by means of the WiFi network. A user implements wireless communication with a cloud by means of cellular data of a mobile phone, such as a 4G or 5G signal. Certainly, when the cloud is also in the WiFi network coverage environment, the user may implement wireless communication with the cloud by connecting a WiFi communication module of the mobile phone to the WiFi network.

In this case, the user sends an instruction of adjusting an output parameter to the remote control power supply by means of the mobile communication device through a wireless network, and a control unit of the remote control power supply 100 receives the instruction of adjusting the output parameter by means of the connected wireless network, so as to adjust the output parameter of the remote control power supply.

Specifically with reference to FIG. 4a, FIG. 4b and FIG. 4c, a schematic diagram of a remote control power supply and a fan to be assembled, a schematic diagram illustrating that a remote control power supply is assembled and applicable to a fan, and a schematic diagram illustrating that a remote control power supply is assembled and applicable to a cleaning robot are shown, a fan 200a or a cleaning robot 200b is connected to a remote control power supply (such as a remote control power supply 100a in the form of a single battery) respectively, and the remote control power supply supplies electric energy for work of the fan 200a and the cleaning robot 200b. In this case, the remote control power supply 100 is in a WiFi network coverage environment, and the remote control power supply 100 is connected to a home WiFi network by means of the WiFi communication module, and is in wireless communication with the mobile communication device by means of the WiFi network. A user can remotely control, by means of a terminal APP, the remote control power supply 100 to be turned on, such that the fan or the cleaning robot can be turned on to work. The user can further remotely control adjustment of an output parameter of the remote control power supply, such as changes in a wind speed of the fan and a cleaning mode of the cleaning robot.

### [Application scenario 2]

When a user carries a remote control power supply 100 outdoors without WiFi network coverage, the remote control power supply 100 is connected to a mobile communication device by means of a non-cellular communication module, such as a Bluetooth communication module, and the user implements wireless communication with a cloud 300 by means of cellular data of a mobile phone, such as a 4G or 5G signal.

In this case, the user sends an instruction of adjusting an output parameter to the remote control power supply by means of the mobile communication device through a wireless network, and a control unit of the remote control power supply 100 receives the control instruction of adjusting the output parameter by means of the connected wireless network, so as to adjust the output parameter of the remote control power supply.

With reference to FIG. 4d, a schematic diagram illustrating that a remote control power supply is assembled and applicable to an outdoor vehicle-mounted refrigerator is shown, and a remote control power supply 100 (such as a remote control power supply 100c in the form of five batteries) supplies electric energy to an outdoor vehicle-mounted refrigerator 200c. In this case, the remote control power supply 100 is located outdoors without WiFi network coverage, and the remote control power supply 100 is connected to a mobile communication device by means of a cellular communication module in the remote control power supply, such as a 4G or 5G communication module. A user can remotely control, by means of a terminal APP, an output parameter of the remote control power supply 100 such as adjusting output power of the outdoor vehicle-mounted refrigerator.

With reference to FIG. 4e, another form, that is, a form of an energy storage power station, of a remote control power supply 100 is shown, a remote control power supply (such as a remote control power supply 100e in the form of an energy storage power station) supplies electric energy to an outdoor vehicle-mounted refrigerator 200c. In this case, the remote control power supply 100 includes a plurality of battery modules, the battery module includes a plurality of batteries 10, and the remote control power supply 100 is used as an energy storage power supply or an energy storage power station.

In this case, the remote control power supply 100 is located outdoors without WiFi network coverage, and the remote control power supply 100 is connected to the outdoor vehicle-mounted refrigerator 200c by means of a power cord, and is connected to a cloud by means of a cellular communication module in the remote control power supply, such as a 4G or 5G communication module. A user can remotely control, by means of a terminal APP, the remote control power supply 100 to be turned on, such that the outdoor vehicle-mounted refrigerator 200c can be turned on to work.

According to another aspect of the present disclosure, a control method for an electrical device is provided, and is configured to control the electrical device 200 based on the remote control power supply 100 mentioned above. FIG. 27 shows a flowchart illustrating a method for adjusting an output parameter: step S10: sending a request of adjusting an output parameter to the remote control power supply 100 by a mobile communication device; step S20: sending, when step S10 is executed, request information to a cloud for storage; step S30: executing, after the remote control power supply 100 receives a control instruction of adjusting an output parameter, the control instruction; step S40: feeding back an execution situation to the mobile communication device after the remote control power supply 100 executes the control instruction; and step S50: sending feedback information to the cloud by the mobile communication device, classifying and storing the feedback information by the cloud.

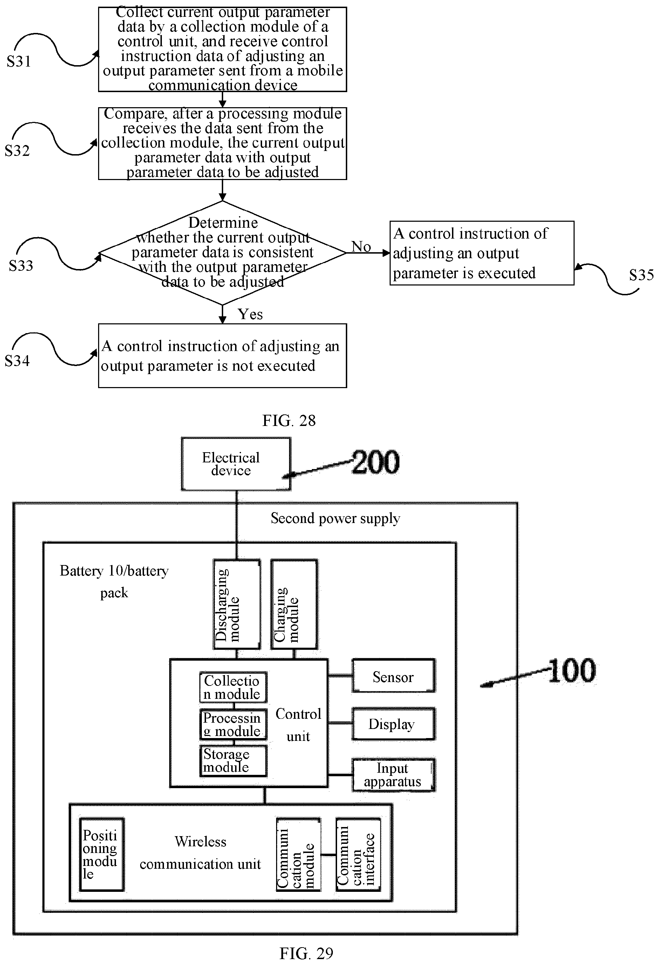

With reference to FIG. 28, before step S30 is executed, there is a comparison method, which includes steps as follows: step S31: collecting current output parameter data by a collection module of a control unit, and receiving control instruction data of adjusting an output parameter sent from a mobile communication device; step S32: comparing, after a processing module receives the data sent from the collection module, the current output parameter data with output parameter data to be adjusted; step S33: determining whether the current output parameter data is consistent with the output parameter data to be adjusted; step S34: if a comparison result is consistence, a control instruction of adjusting an output parameter is not executed; and step S35: if the comparison result is inconsistence, the control instruction of adjusting an output parameter is executed.

With reference to FIG. 24, a schematic module diagram of another control principle of a remote control power supply is shown, and the remote control power supply includes a first power supply 700 (a first power supply 700 shown in FIG. 7 may be referred to as an energy storage power supply) and a second power supply 800.

The first power supply 700 includes a wireless communication unit, which is configured to be in wireless communication with a mobile communication device, the wireless communication unit at least includes a communication module, and specifically, the communication module may include a cellular (such as 2G/3G/4G/5G/NB-IOT/LTE-M) communication module, a non-cellular (such as WiFi/Bluetooth/ZigBee/Lora/Sigfox) communication module, or the cellular and non-cellular communication modules.

Preferably, the communication module at the first power supply is the non-cellular communication module, and specifically, the communication module at the first power supply is the Bluetooth communication module.

The second power supply 800 also includes a wireless communication unit, which is configured to be in wireless communication with the first power supply 700, the wireless communication unit at least includes a communication module, and specifically, the communication module may include a cellular (such as 2G/3G/4G/5G/NB-IOT/LTE-M) communication module, a non-cellular (such as WiFi/Bluetooth/ZigBee/Lora/Sigfox) communication module, or the cellular and non-cellular communication modules.

Preferably, the communication module at the second power supply is the non-cellular communication module, and specifically, the communication module at the second power supply is the Bluetooth communication module.

The second power supply 800 is connected to an electrical device 200 and is configured to supply electric energy to the electrical device 200. Similarly, the electrical device 200 may be an electric tool such as an electric drill, an electric angle grinder, an electric hammer, a sprayer and the like, may also be an electric garden tool such as a pruner, a grass trimmer, a chain saw and the like, may also be an electric household tool such as a vacuum cleaner, a coffee maker, an electric fan, a juicer and the like, and may also be other types of electrical apparatuses such as a glue gun, an air pump, an emergency lamp and the like. In general, the above electrical device 200 may generally refer to work devices using secondary batteries or battery packs (such as the energy storage power supply/an energy storage power station) as power sources. When the electrical device 200 works, a power supply is required to supply electric energy such that the electrical device can be driven to work.

The above second power supply 800 may be arranged in the electrical device 200 to supply electric energy to operation of the electrical device. The second power supply may be further arranged outside the electrical device 200. For instance, when the second power supply 800 is used as a specific energy storage power supply 100e, the energy storage power supply 100e is arranged outside and is connected to a power cord or a data cable of the electrical device 200 to supply power (as shown in FIG. 4e).

Certainly, the above second power supply 800 may be preferably mounted to the electrical device 200 in a freely mountable and dismountable manner. In this case, the second power supply 800 is suitable for usage of different types of electrical devices 200, that is, the second power supply 800 may be shared by the electric tool, the electric garden tool and the electric household tool.

For instance, a user has a second power supply 800 of 3.6 V, 12 V or 20 V, which may be used for the electric drill, the pruner, the vacuum cleaner or the emergency lamp. Such a second power supply 800 can satisfy different use scenarios of the user.

When the second power supply 800 is assembled and connected to the electrical device 200, the second power supply 800 is suitable for being mechanically and electrically connected to the electrical device 200, is fixed through mechanical connection, and supplies electric energy to the electrical device 200 through electrical connection.

With reference to FIG. 29, a schematic diagram of functional modules of a second power supply is shown. The second power supply 800 includes: a battery 10 or a battery pack, which is configured to supply electric energy to an electrical device 200; a wireless communication unit, which is configured to be in wireless communication with a first power supply 700; and a control unit, which is configured to receive, by means of the wireless communication unit of the second power supply 800, a control instruction of adjusting an output parameter sent from the first power supply 700, and execute adjustment according to the control instruction. It should be noted that the control instruction of adjusting an output parameter sent from the first power supply 700 is actually sent from the mobile communication device to the first power supply 700, that is, the first power supply 700 is configured to forward the control instruction sent from the mobile communication device to the wireless communication unit of the second power supply 800.

The above control unit includes: a collection module, which is configured to collect a current output parameter of a remote control power supply, collect a wireless communication signal and send the collected data and/or signal to a processing module; the processing module, which is configured to compare the current output parameter collected by the collection module with an output parameter to be adjusted sent from the mobile communication device; if a comparison result is consistence, the output parameter is not required to be adjusted, and the result is fed back to the mobile communication device; if the comparison result is inconsistence, the current output parameter is adjusted to the output parameter to be adjusted, and an adjustment result is fed back to the mobile communication device; and a storage module, which is configured to store the current output parameter collected by the collection module, and store the above comparison result when there is no network.

The above output parameter includes one or more of output power, output time, an output current direction and an output mode. For instance, when an electric fan is adjusted, the output parameter is basically the output power, and a wind speed of the electric fan may be adjusted by adjusting the output power. For another instance, when a vacuum cleaner is adjusted, the output parameter may also be the output power, and a suction force of the vacuum cleaner may be adjusted by adjusting the output power. For another instance, when an electric drill is adjusted, the adjustment parameter may be the output power and the output current direction, a rotation speed of the electric drill may be adjusted by adjusting the output power, and a rotation direction of the electric drill may be adjusted by adjusting the output current direction. For another instance, when a coffee maker is adjusted, the output parameter of the coffee maker may be the output mode, and the output mode may be set according to a flavor of coffee, such as American flavor, latte flavor, Italian concentrated flavor and the like.

The above battery 10 or the battery pack at least includes one battery such as one 21700 battery. Certainly, the battery 10 or the battery pack may also include three 21700 batteries connected in series, or five 21700 batteries connected in series to meet demands of electrical apparatuses of different voltage platforms. It is to be noted that the above description is merely an instance and is not limited to the application of the 21700 battery, and other types of batteries such as a 18650 battery can also be used.

Moreover, the above battery pack may further include at least one battery module, and the battery module includes a plurality of batteries connected in series or in parallel. Thus, the above battery pack is used as an energy storage power supply or an energy storage power station 100e.

Specifically, the above second power supply 800 may be in various forms, for instance, a form of a single battery as shown in FIG. 3a, a form of three batteries as shown in FIG. 3b, a form of five batteries as shown in FIG. 3c, a form of multiple remote control power supplies combined with each other in which each of the multiple intelligent power supplies is in the form (as shown in FIG. 3a) as shown in FIG. 3d, or a form of an energy storage power station as shown in FIG. 3e.

According to a particular example of the present disclosure, with reference to FIG. 29, a schematic diagram of functional modules of a second power supply is shown, and the second power supply 800 includes a control unit, an input apparatus and a communication interface.

The input apparatus and the communication interface are in communication connection to the control unit respectively. The control unit includes a microprocessor configured to process data and a memory configured to store data. The control unit may be in communication with the first power supply 700 by means of the communication interface, and may also be in communication with a mobile communication device by means of the communication interface. A user may input an instruction or information into the control unit by means of the input apparatus, so as to cause the control unit to execute contents of the instruction or information.

The control unit of the second power supply 800 is connected to the first power supply 700 by means of the communication interface, the first power supply 700 establishes communication with the mobile communication device by means of a wireless network, the mobile communication device establishes communication with the cloud by means of the wireless network, the mobile communication device controls the second power supply 800 by means of the first power supply 700, and the second power supply 800 regularly reports status information to the cloud by means of the first power supply 700 and the mobile communication device. The status information includes one or more of electricity usage status information, power-off status information, position information, residual capacity, a temperature, and the like.

In addition, the second power supply 800 further includes a sensor and a display, and the sensor and the display are in communication connection to the control unit respectively. The sensor may collect status information (such as the temperature, the residual capacity, the position information and the like) of the battery or the battery pack in real time, and send the status information to the control unit. The display may display contents (such as the temperature, the residual capacity, the position information and the like) and/or an interface (such as an interactive interface) desired by the user as needed. Certainly, the display and the sensor are not necessary components of the second power supply.

In addition, the wireless communication unit of the above second power supply 800 is configured to be in wireless communication with the first power supply 700, and in addition to the above communication module, the wireless communication unit may also include a positioning module, such as a GNSS module or a GPS module, which includes a GPS module or a Beidou module.

The above control unit includes an electronic controller and an executor. The electronic controller is the above processor, and is configured to identify a wireless signal received by the wireless communication unit of the second power supply 800, and drive the executor to operate. The executor is configured to execute an action of adjusting an output parameter.

The wireless signal may include a control instruction of adjusting an output parameter, and may be further a power-on or power off control instruction. Specifically, when the mobile communication device forwards the control instruction of adjusting an output parameter to the wireless communication unit of the second power supply 800 by means of the first power supply 700, the wireless signal is the control instruction of adjusting an output parameter.

In a feasible example, the executor is a circuit switch that is simple in structure and low in cost. Certainly, in other examples, the executor may be other structures capable of adjusting the output parameter.

In addition, it is also worth noting that the above first power supply 700 may be further suitable for charging the second power supply 800, and when power of the second power supply 800 is insufficient, a user can use the first power supply 700 to supply electric energy to the second power supply 800. Preferably, a capacity (Ah) of the first power supply 700 is greater than that of the second power supply.

Specifically, the above first power supply 700 is preferably in the form of an energy storage power station. That is, as shown in FIG. 3e, the first power supply includes at least one battery module, and the battery module includes a plurality of batteries 10. In this case, the battery or the battery pack is used as an energy storage power supply or an energy storage power station (also referred to as outdoor power supply).

According to the technology of an existing energy storage power station, a conventional energy storage power station or outdoor power supply has DC output and AC output functions, and is provided with a car cigarette lighter (car charging port), a utility power charging port, a solar panel charging port, a bidirectional PD charging and discharging port, an intelligent display screen, etc. It can be seen therefrom that when the first power supply 700 is in the form of the energy storage power station, the first power supply will have conventional necessary functions and configurations of the existing energy storage power station.

### [Application scenario 3]

When a user carries a first power supply 700 and a second power supply 800 outdoors without WiFi network coverage, the first power supply 700 is connected to a mobile communication device by means of a non-cellular communication module, such as a Bluetooth communication module, the second power supply is connected to the first power supply by means of a non-cellular communication module, such as a Bluetooth communication module, and the user implements wireless communication with the mobile communication device by means of cellular data of a mobile phone, such as a 4G or 5G signal.

In this case, the user sends a control instruction of adjusting an output parameter to the first power supply 700 by means of the mobile communication device through the Bluetooth, the first power supply 700 sends the control instruction of adjusting an output parameter to the second power supply 800 by means of the connected Bluetooth, a control unit of the second power supply 800 receives the control instruction of adjusting an output parameter, whether an output parameter of current operation is consistent with an output parameters to be adjusted is determined, if yes, execution is not required, and if no, execution is performed according to the control instruction sent from the mobile communication device.

As shown in a schematic diagram illustrating that a combination of a first power supply and a second power supply is suitable for an outdoor vehicle-mounted refrigerator, the second power supply 800 (such as a remote control power supply 100c in the form of five batteries) supplies electric energy to the outdoor vehicle-mounted refrigerator 200c. In this case, the second power supply 800 is connected to the first power supply 700 by means of a non-cellular communication module, such as a WiFi or Bluetooth communication module, the first power supply 700 is connected to a mobile communication device by means of a non-cellular communication module in the first power supply, such as a WiFi or Bluetooth communication module, the user can remotely control an output parameter of the second power supply by means of a terminal APP through the first power supply such that operating power of the outdoor vehicle-mounted refrigerator 200c can be adjusted.

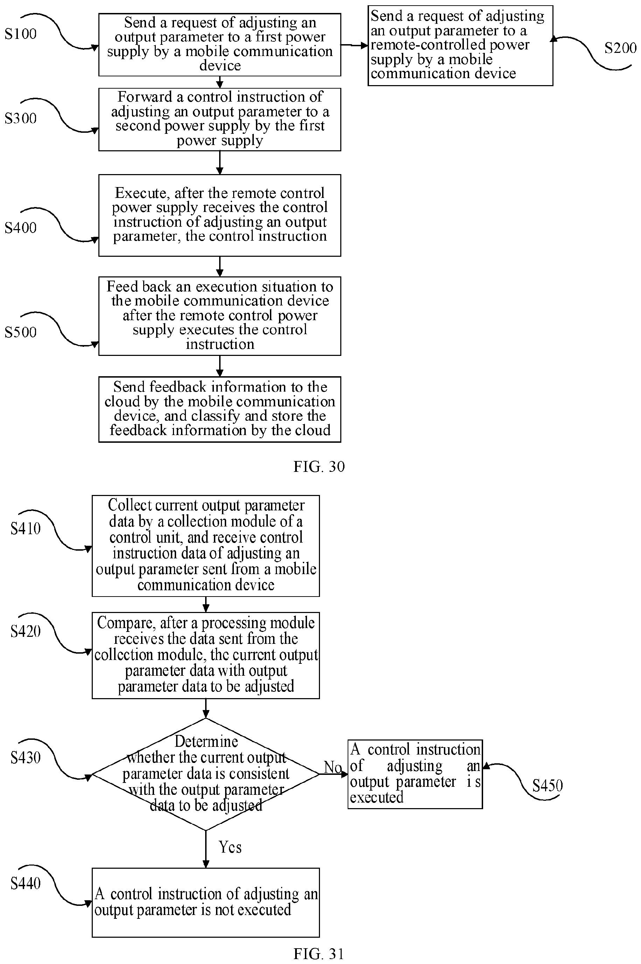

FIG. 30 shows a flowchart illustrating a method for adjusting an output parameter, and steps are as follows: step S100: a request of adjusting an output parameter is sent to a first power supply 700 by a mobile communication device; step S200: when step S100 is executed, request information is sent to a cloud for storage; step S300: a control instruction of adjusting an output parameter is forwarded to a second power supply 800 by the first power supply 700; step S400: after the second power supply 800 receives the control instruction of adjusting an output parameter, the control instruction is executed; step S500: an execution situation is fed back to the mobile communication device by the remote control power supply 100 through the first power supply after executing the control instruction; and step S600: feedback information is sent to the cloud by the mobile communication device, and the feedback information is classified and stored by the cloud.

With reference to FIG. 31, before step S400 is executed, there is a data comparison method, which includes steps as follows: step S410: current output parameter data is collected by a collection module of a control unit, and control instruction data of adjusting an output parameter sent from a mobile communication device is received; step S420: after a processing module receives the data sent from the collection module, the current output parameter data is compared with output parameter data to be adjusted; step S430: it is determined whether the current output parameter data is consistent with the output parameter data to be adjusted; step S440, if a comparison result is consistence, a control instruction of adjusting an output parameter is not executed; and step S450: if the comparison result is inconsistence, the control instruction of adjusting an output parameter is executed.

In summary, the present disclosure further relates to a remote control power supply 100 for an electrical device, which is configured to receive a control instruction of adjusting an output parameter sent from a mobile communication device by means of a wireless network and execute the control instruction.

The remote control power supply 100 includes: a battery 10 or a battery pack, which is configured to supply electric energy to the electrical device 200; a wireless communication unit, which is configured to be in wireless communication with the mobile communication device; and a control unit, which is configured to receive a control instruction of adjusting an output parameter sent from the mobile communication device by means of the wireless communication unit, and adjust an output parameter of the remote control power supply 100 according to the control instruction.

Further, the control unit includes: a collection module, which is configured to collect first data and second data, where the first data is output parameter data of current operation of the remote control power supply, and the second data is output parameter data to be adjusted sent from the mobile communication device; and a processing module, which is configured to receive the first data and the second data collected by the collection module and compare the first data with the second data.

Further, the control unit further includes: a storage module, which is configured to store the data collected by the collection module and comparison result data of the processing module, and send the stored data to the mobile communication device after the storage module is connected to the wireless network.

Further, the output parameter includes one or more of output power, output time, an output current direction and an output mode.

The present disclosure provides a power supply assembly for an electrical device. The power supply assembly includes: the remote control power supply and the energy storage power supply mentioned above, which are configured to be in wireless communication connection to a mobile communication device and in wireless communication connection to the wireless communication unit of the remote control power supply, such that the remote control power supply is in wireless communication with the mobile communication device; where the energy storage power supply is capable of charging the remote control power supply.

The present disclosure provides an electrical device. The electrical device includes: an electrical assembly; and the power supply assembly mentioned above, which is configured to supply electric energy to the electrical assembly.

The present disclosure provides an electrical system. The electrical system includes: a cloud; a mobile communication device, which is in wireless communication connection to the cloud; and the power supply assembly mentioned above, where the remote control power supply of the power supply assembly is in wireless communication connection to the mobile communication device; where the mobile communication device is configured to send a control instruction of adjusting an output parameter to the remote control power supply such that an output parameter of the remote control power supply can be adjusted.

The present disclosure provides a control method for an electrical device. The control method is applied to the above electrical system, and includes: sending a request of a control instruction of adjusting an output parameter to the remote control power supply by the mobile communication device by means of a wireless network; and executing the control instruction by the remote control power supply, and feeding back execution status information to the mobile communication device.

Further, before the remote control power supply executes the control instruction, a data comparison method is required, and the data comparison method includes: comparing the first data with the second data, and determining whether the first data is consistent with the second data; if a comparison result is consistence, the control instruction is not executed; and if the comparison result is not consistence, the control instruction is executed; where the first data is output parameter data of current operation of the remote control power supply, and the second data is output parameter data to be adjusted sent from the mobile communication device.

Further, when the mobile communication device sends the request of the control instruction to the remote control power supply, the request of the control instruction is sent to the cloud for storage.

Further, the mobile communication device sends feedback execution status information to the cloud for storage.

According to the technical solutions provided in examples of the present disclosure, the remote control power supply is capable of being in wireless communication with the mobile communication device, that is, the remote control power supply has networking and communication functions such that a user can remotely control the remote control power supply so as to adjust an output parameter, control of the remote control power supply is more intelligent, and user experience is improved.

It should be understood that the above general descriptions and the detailed description hereinafter are merely exemplary and explanatory, and should not be construed as a limitation to the present disclosure.

In addition, with further reference to FIG. 9, the first power supply 700 includes a first wireless communication unit, which is configured to be in wireless communication with a mobile communication device, and the first wireless communication unit at least includes a first communication module.

The second power supply 800 includes a second wireless communication unit, which is configured to be in wireless communication with the mobile communication device or the first power supply, and the second wireless communication unit at least includes a second communication module.

A data transmission distance of the first communication module is greater than that of the second communication module under the same conditions.

As described above, the above first power supply 700 may be suitable for charging the second power supply 800, and a capacity (Ah) of the first power supply 700 is greater than that of the second power supply. Preferably, the capacity of the first power supply 700 is at least twice the capacity of the second power supply.

The above first power supply 700 receives control instruction data sent from the mobile communication device by means of the first wireless communication unit and forwards the control instruction data to the second power supply. The first wireless communication unit at least includes a first communication module. Specifically, the first communication module may include a cellular (such as 2G/3G/4G/5G/NB-IOT/LTE-M) communication module, a non-cellular (such as WiFi/Bluetooth/ZigBee/Lora/Sigfox) communication module, or the cellular and non-cellular communication modules.

Specifically, the first communication module is the non-cellular communication module, such that networking cost is reduced. Preferably, the first communication module is the Bluetooth communication module.

The above second power supply 800 includes the second wireless communication unit, which is configured to be directly in wireless network communication with the mobile communication device so as to directly receive control instruction data sent from the mobile communication device, or is configured to be in wireless network communication with the second power supply such that the control instruction data is forwarded by means of the first power supply. The second wireless communication unit at least includes a second communication module. Specifically, the second communication module may include a cellular (such as 2G/3G/4G/5G/NB-IOT/LTE-M) communication module, a non-cellular (such as WiFi/Bluetooth/ZigBee/Lora/Sigfox) communication module, or the cellular and non-cellular communication modules.

Specifically, the second communication module is the non-cellular communication module, such that networking cost is reduced. Preferably, the second communication module is the Bluetooth communication module.

A data transmission distance of the above first communication module is greater than that of the above second communication module under the same conditions, such that networking cost is reduced, and long-distance data transmission is achieved.

Specifically, the data transmission distance of the first communication module is at least 1.2 times the data transmission distance of the second communication module under the same conditions. Furthermore, the data transmission distance of the first communication module is 1.5 times - 2 times the data transmission distance of the second communication module under the same conditions.

In this way, transmission power of the first communication module is greater than that of the second communication module under the same conditions; or an antenna gain of the first communication module is greater than that of the second communication module under the same conditions, such that a transmission distance of the first communication module is greater than that of the second communication module.

The above first power supply or the mobile communication device may be in wireless communication connection to a plurality of second power supplies moreover at the same time, that is, may control a plurality of second power supplies at the same time, and may control a plurality of electrical devices applying the above second power supplies at the same time.

When a distance between the mobile communication device and the electrical device exceeds a preset transmission distance, the mobile communication device is in wireless communication connection to the first power supply, and then the first power supply is in wireless communication connection to the second power supply, that is, control instruction data sent from the mobile communication device or feedback information fed back from the second power supply is forwarded by the first power supply. When a distance between the mobile communication device and the electrical device is within a preset transmission distance, information may be forwarded by the first power supply, that is, the mobile communication device is in wireless communication connection to the first power supply, and then the first power supply is in wireless communication connection to the second power supply. Certainly, the mobile communication device may be directly in wireless communication connection to the electrical device.

Specifically, when a distance between the mobile communication device and the electrical device exceeds a preset transmission distance, data communication of a remote control battery adopts a first data communication method. The first data communication method includes: step S1: a first power supply receives control instruction data sent from a mobile communication device through a first wireless communication network; step S2: a second power supply receives the control instruction data forwarded from the first power supply by means of a second wireless communication network; step S3: the second power supply feeds back execution information and status information of the control instruction to the first power supply by means of the second wireless communication network; and step S4: the first power supply forwards the received status information and execution information to the mobile communication device by means of the first wireless communication network.

The above first wireless communication network is established between the mobile communication device and the first power supply such that bidirectional data transmission between the mobile communication device and the first power supply can be achieved. The above second wireless communication network is established between the first power supply and the second power supply such that bidirectional data transmission between the first power supply and the second power supply can be achieved. A data transmission distance of the first communication module of the first power supply is greater than that of the second communication module of the second power supply such that long-distance communication between the mobile communication device and the electrical device can be achieved.

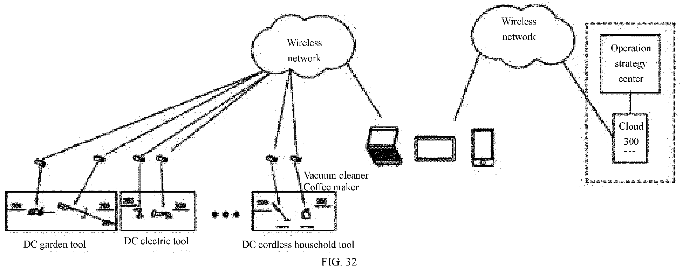

In addition, with reference to FIG. 32, a schematic module diagram of a principle of controlling a plurality of electrical devices by a remote control power supply is shown. An electrical system includes: a cloud; a mobile communication device, which is configured to be in wireless communication connection to the cloud 300; and a plurality of remote control power supplies, which are configured to be in wireless communication connection to the mobile communication device.

Each of the remote control power supplies is configured to supply electric energy to the electrical device 200, receive a control instruction sent from the mobile communication device by means of a wireless network, execute the control instruction, and send execution information or feedback information to the mobile communication device by means of the wireless network.

The above mobile communication device may be in wireless communication connection to the plurality of remote control power supplies 100 at the same time such that the mobile communication device may control the plurality of remote control power supplies at the same time, that is, control working states of the plurality of electrical devices.

The above mobile communication device at least includes a processor and a memory. The processor numbers a user power supply and the remote control power supply according to identification information based on a preset rule, analyzes and processes connection information between the remote control power supply and the electrical device, and outputs corresponding information between the remote control power supply and the electrical device. The memory stores the above identification information, the numbered information, and the correspondence information.

After the processor receives the identification information of the remote control power supply or the identification information of the electrical device, numbering is carried out according to the preset rule, and the numbered information is stored in the memory. The processor further analyzes the connection information, the number of the remote control power supply corresponds to the number of the electrical device, and the corresponding information is stored in the memory. A database is formed by the number of the remote control power supply, the number of the electrical device and the corresponding relation between the two numbers described above, and the database is uploaded to the cloud.

The preset rule of the remote control power supply may be that numbering is carried out by means of a specification, a model, a product serial number according to a rule of combination of letters, numbers and characters. The preset rule of the electrical device may be that numbering is carried out by means of a specification, a model, a function and a product serial number according to a rule of combination of letters, numbers and characters.

The above mobile communication device further includes a display apparatus, which is configured to display a working state of each electrical device, and a working state of the remote control power supply for supplying power to the electrical device such that a user can conveniently input a control instruction according to an indication, and can conveniently check states of the remote control power supply and the electrical device.

The above mobile communication device may be an intelligent terminal such as a mobile phone, a pad, a notebook and the like.

Specifically, a control method for an electrical device includes: step S1: inputting a control instruction for one or more electrical devices by a user; step S2: receiving, by a processor of a mobile communication device, a request of executing the above control instruction, analyzing and processing the request information, and finding, by querying a database, out a number of a remote control power supply receiving the above request information; step S3: sending the control instruction to the remote control power supply corresponding to the above number by the mobile communication device by means of a wireless communication network; and step S4: receiving the above request information by the remote control power supply, processing and analyzing the request information, and execute the control instruction.

The above control method further includes: step S5: detecting, before the remote control power supply executes the control instruction, whether the remote control power supply is electrically connected to the electrical device; step S6: if yes, the control instruction is executed by the remote control power supply; and step S7: if not, the control instruction is not executed by the remote control power supply, and information indicating that the remote control power supply is not electrically connected to the electrical device is fed back to the mobile communication device.

When the above mobile communication device is in wireless communication connection to the cloud, the above database is transmitted to the cloud through the wireless communication network for classification and storage. The communication module between the mobile communication device and the cloud is a cellular communication module such that long-distance transmission between the mobile communication device and the cloud can be achieved.

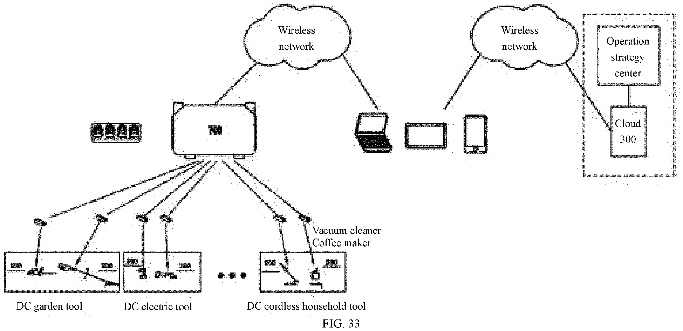

With further reference to FIG. 33, an electrical system includes: a cloud; a mobile communication device, which is configured to be in wireless communication connection to the cloud; a first power supply, which is configured to be in wireless communication connection to the mobile communication device; and a plurality of second power supplies, which are configured to be in wireless communication connection to the first power supply.

The second power supply is configured to supply electric energy to the electrical device 200, receive a control instruction sent from the mobile communication device by means of the first power supply, execute the control instruction, and send execution information or feedback information to the mobile communication device by means of the first power supply.

The second power supply 800 is connected to the electrical device 200 and is configured to supply electric energy to the electrical device 200.

The above first power supply 700 may be in wireless communication connection to the plurality of second power supplies 800 at the same time, such that the mobile communication device may control the plurality of second power supplies 800 at the same time, that is, control working states of a plurality of electrical devices.

As shown in FIG. 9, the above first power supply 700 includes: a battery 10 or a battery pack, which is configured to supply electric energy to the second power supply 800; a second wireless communication unit, which is configured to be in wireless communication with the mobile communication device; and a second control unit, which is configured to process and analyze request information of the control instruction, forward the request information to the first power supply, and number the second power supply and the electrical device.

The above first power supply 700 may be further suitable for charging the second power supply 800. Preferably, a capacity (Ah) of the first power supply 700 is greater than that of the second power supply, and when power of the second power supply 800 is insufficient, a user can use the first power supply 700 to supply electric energy to the second power supply 800.

Specifically, the above first power supply 700 is preferably in the form of an energy storage power station. That is, as shown in FIG. 3e, the first power supply includes at least one battery module, and the battery module includes a plurality of batteries 10. In this case, the battery or the battery pack is used as an energy storage power supply or an energy storage power station (also referred to as outdoor power supply).

The above second control unit includes: a second processing module, which is configured to analyze and process request information of the control instruction, control the request information to be sent to a corresponding second power supply, and number the second power supply and the electrical device according to a preset rule; and a second storage module, which is configured to store the above identification information, connection information and corresponding information, and form a database.

After the second processing module receives the identification information of the second power supply or the identification information of the electrical device, numbering is carried out according to a preset rule, and the numbered information is stored in the memory. The second processing module further analyzes the connection information, a number of the second power supply corresponds to a number of the electrical device, and corresponding information is stored in the memory. The database is formed by the number of the second power supply, the number of the electrical device and the corresponding relation between the two numbers described above, and the database is uploaded to the cloud.

The preset rule of the second power supply may be that numbering is carried out by means of a specification, a model, a product serial number according to a rule of combination of letters, numbers and characters. The preset rule of the electrical device may be that numbering is carried out by means of a specification, a model, a function and a product serial number according to a rule of combination of letters, numbers and characters.

The above second control unit further includes: a second collection unit, which is configured to collect status information of the first power supply.

The above mobile communication device at least includes a communication apparatus, a processing apparatus and a memory. The communication apparatus is configured to send or receive a signal by means of a wired or wireless network; the processing apparatus includes an application processing part and a radio frequency/digital signal processor; and the memory is configured to process or store a signal in a physical storage state; and the mobile communication device is an intelligent terminal, such as a mobile phone, a pad, a notebook and the like.

The above mobile communication device further includes a display apparatus, which is configured to display a working state of each electrical device, and a working state of the second power supply for supplying power to the electrical device such that a user can conveniently input a control instruction according to an indication, and can conveniently check status information of the first power supply, the second power supply and the electrical device.

Specifically, the control method for an electrical device includes: step S10: inputting a control instruction for one or more electrical devices by a user; step S20: sending request information of the control instruction to a first power supply by a mobile communication device; step S30: receiving the above request information by a second processing unit of the first power supply, analyzing and processing the request information, and finding, by querying a database, out a number of a second power supply required to receive the above request information; step S40: sending the request information to the second power supply corresponding to the number by the first power supply through a wireless communication network; and step S50: receiving the above request information by the second power supply, analyze and process the request information, and execute the control instruction.

The above control method further includes: step S60: detecting, before the second power supply executes the control instruction, whether the second power supply is electrically connected to the corresponding electrical device; step S70: if yes, the control instruction is executed by the second power supply; and step S80: if not, the control instruction is not executed by the second power supply, and information indicating that the second power supply is not electrically connected to the electrical device is fed back to the mobile communication device.

When the above mobile communication device is in wireless communication connection to the cloud, the above information and database is transmitted to the cloud by means of the wireless communication network for classification and storage. The communication module between the mobile communication device and the cloud is a cellular communication module such that long-distance transmission between the mobile communication device and the cloud can be achieved.

With further reference to FIG. 26 or FIG. 29, the remote control power supply 100 may further include a monitoring unit, which is configured to collect operating parameter(s) of an electrical device 200 and/or a remote control power supply 100, and analyze and process the operating parameters; and a control unit, which is configured to receive a control instruction sent from a mobile communication device, execute the control instruction, and control the remote control power supply and/or the remote control power supply according to a processing result obtained by the monitoring unit.

Specifically, the above monitoring unit includes: a collection module, which is configured to collect the operating parameter(s) of the remote control power supply 100 and/or the electrical device 200 in real time; a processing module, which is configured to extract a feature from the operating parameter collected by the collection module, perform self-comparison and cross-comparison on the extracted feature, receive the control instruction sent from the mobile communication device, and execute the control instruction; and a storage module, which is configured to store the operating parameters and processing results of the processing module.

The collection module may be a sensor, which is configured to collect various operating parameters. The storage module may be a FLASH chip, a random access dynamic memory or a cache chip.

The above self-comparison refers to comparing a currently extracted feature with a previously collected feature, the cross-comparison refers to comparing the extracted feature with a preset threshold value, and whether the operating parameter is abnormal is determined according to a self-comparison result and a cross-comparison result.

When the above storage module carries out storage, if the currently extracted feature is consistent with the previously stored feature, recording time is modified to current time; and if the currently extracted feature is not consistent with the previously stored feature, the previous feature is replaced with the current feature, and the recording time is modified to current time.

The operating parameter of the above remote control power supply may be one or more of a voltage parameter, a current parameter, a temperature parameter and a state-of-charge parameter. The operating parameter of the above electrical device may be one or more of an operating power parameter, an operating mode parameter, an operating time parameter, a position parameter and a temperature parameter.

For instance, when a collected parameter is the temperature parameter of the remote control power supply during charging, the collected temperature parameter is compared with a previously stored temperature parameter, and moreover, the collected temperature parameter is compared with a pre-stored threshold value. If the current temperature is higher than a previous temperature during self-comparison, and the current temperature exceeds the threshold value, it indicates that an abnormality occurs, and an abnormal result is sent to the control unit. The control unit controls the remote control power supply to stop charging, and moreover, reminder information is sent to the mobile communication device to inform a user.

For another instance, when a collected parameter is the voltage parameter of the remote control power supply during discharging, the current voltage is compared with a pre-stored discharge voltage, and moreover, the current voltage is compared with a pre-stored threshold value. If the voltage decreases during self-comparison, and the discharge voltage is lower than the preset threshold value, it is regarded that an abnormality occurs, and the processing unit sends an abnormal result to the control unit. The control unit controls the remote control power supply to stop discharging the electrical device, and moreover, reminder information is sent to the mobile communication device to inform a user.

For another instance, when a collected parameter is the position parameter of the electrical device, the collected position parameter is compared with a previous position parameter, and moreover, the collected position parameter is compared with a preset threshold value. If a distance between the current position and the previous position becomes greater during self-comparison, and the current position exceeds a preset regional threshold value, it is regarded that an abnormality occurs, and an abnormal result is sent to the control unit. The control unit controls the remote control power supply to give alarm information, and reminder information is sent to the mobile communication device to inform a user.

In this way, another aspect of the present disclosure further relates to a monitoring method for a power supply system, which is configured to monitor the remote control power supply 100 and the electrical device 200 based on the remote control power supply 100 mentioned above. A flowchart of the monitoring method is as follows: step S10: a parameter collection step, specifically, collecting operating parameter(s) of the remote control power supply and/or the electrical device by a collection module; step S20: a feature extraction step, specifically, extracting, by a processing module, a feature of the operating parameter collected by the collection module; step S30: a comparison and analysis step, specifically, performing self-comparison and cross-comparison on the extracted feature, such that a self-comparison result and a cross-comparison result are obtained; step S40: an abnormality determination step, specifically, determining whether an abnormality occurs according to the processed self-comparison and cross-comparison results; step S50: an abnormality processing step, specifically, if the abnormality occurs, a corresponding control instruction is obtained according to a preset rule, sending the control instruction to a control unit, executing the control instruction by the control unit, and sending reminder information indicating that the abnormality occurs and execution information to the mobile communication device; and step S60: a parameter transmission step, specifically, if no abnormality occurs, transmitting extracted parameter information to the mobile communication device, transmitting the parameter information to the cloud by the mobile communication device, and classifying and storing the parameter information by the cloud.

The above self-comparison refers to comparing a currently extracted feature with a previously stored feature, the cross-comparison refers to comparing the current feature with a preset threshold value, and whether the operating parameter is abnormal is determined according to a self-comparison result and a cross-comparison result.

The preset rule is that when the voltage parameter, the current parameter, the temperature parameter or the state-of-charge parameter of the remote control power supply is abnormal, the remote control power supply is controlled to stop operating, specifically, stop charging or discharging the electrical device. When the working power parameter, the working mode parameter, the working time parameter or the temperature parameter of the electrical device is abnormal, the remote control power supply is controlled to stop supplying power to the electrical device. When the position parameter of the electrical device is abnormal, the remote control power supply is controlled to stop operating, specifically, stopping supplying power to the electrical device, and moreover, the remote control power supply is controlled to give an alarm signal.

The above control instruction is mainly a control instruction of controlling the remote control power supply or the electrical device to stop operating, and when the position parameter exceeds a preset area, a control instruction of emitting an alarm signal is further required.

The above reminder information informs a user through a certain reminder mode, which may be one or more modes of sound, text, image, vibration or light.

After the above parameter information is transmitted to the mobile communication device, the mobile communication device compares the current parameter information with previously stored parameter information; if the two are consistent, recording time is modified to current time; and if they are inconsistent, the previously stored parameter information is replaced with the current parameter information, and the recording time is modified to the current time.

After the parameter information is transmitted to a cloud, the parameter information is classified and stored such that a user can conveniently query data.

The above examples are merely preferred examples of the present disclosure, and are not intended to limit the present disclosure. Any modifications, equivalents, improvements, etc. made within the spirit and principles of the present disclosure should fall within the scope of protection of the present disclosure.

## Claims

1. A remote control power supply for an electrical device, configured to receive a power-on instruction sent from a cloud by means of a wireless network and then turn on the electrical device, and comprising: a battery or a battery pack, configured to supply electric energy to the electrical device; a wireless communication unit, configured to be in wireless communication with the cloud; and a control unit, configured to receive the power-on instruction sent from the cloud by means of the wireless communication unit, and drive the battery or the battery pack to turn on the electrical device according to the power-on instruction.

2. The remote control power supply for an electrical device of claim 1, wherein the control unit is further suitable for being configured to receive a power-off instruction sent from the cloud by means of the wireless communication unit, and drive the battery or the battery pack to turn off the electrical device according to the power-off instruction.

3. The remote control power supply for an electrical device of claim 1 or 2, wherein the control unit comprises: an electronic controller and an executor; the executor is configured to execute actions of turning on or turning off the electrical device; the electronic controller is configured to identify a wireless signal received by the wireless communication unit and sent from the cloud, and drive the executor to act; and the wireless signal comprises the power-on instruction or the power-off instruction.

4. The remote control power supply for an electrical device of claim 3, wherein the executor is a circuit switch.

5. The remote control power supply for an electrical device of claim 3, wherein the wireless signal is generated by the cloud when receiving a power-on request sent from a mobile communication device.

6. A power supply assembly for an electrical device, comprising: the remote control power supply according to any one of claims 1 to 5.

7. The power supply assembly for an electrical device of claim 6, further comprising: an energy storage power supply, which is configured to be in wireless communication connection to a cloud and in wireless communication connection to the wireless communication unit of the remote control power supply, such that the remote control power supply is in wireless communication with the cloud; wherein the energy storage power supply is capable of charging the remote control power supply.

8. The power supply assembly for an electrical device of claim 7, further comprising: a switching power supply; wherein when the energy storage power supply is electrically connected to the switching power supply, a wireless communication function of the energy storage power supply or the switching power supply is activated, such that the energy storage power supply or the switching power supply is in wireless communication connection to the cloud; and the energy storage power supply or the switching power supply is in wireless communication connection to the wireless communication unit of the remote control power supply, such that the remote control power supply is in wireless communication with the cloud.

9. The power supply assembly for an electrical device of claim 8, wherein the energy storage power supply comprises a mounting portion, and the switching power supply is adapted, mounted and connected to the mounting portion, such that the switching power supply is electrically connected to the energy storage power supply.

10. The power supply assembly for an electrical device of claim 9, wherein the mounting portion is provided with a first signal terminal, the switching power supply comprises a second signal terminal, and when the switching power supply is positioned and mounted to the mounting portion, the first signal terminal and the second signal terminal are mounted, matched and connected, such that the switching power supply is electrically connected to the energy storage power supply.

11. The power supply assembly for an electrical device of claim 8, wherein after the wireless communication function of the energy storage power supply or the switching power supply is activated, when the switching power supply is taken down from the energy storage power supply, the switching power supply is capable of being used as an accompanying wireless network.

12. An electrical device, comprising: an electrical assembly; and the power supply assembly according to any one of claims 6 to 11, wherein the power supply assembly is configured to supply electric energy to the electrical assembly.

13. The electrical device of claim 12, further comprising a housing, wherein the remote control power supply is detachably mounted to the housing.

14. The electrical device of claim 12, wherein the remote control power supply is suitable for an electric tool.

15. The electrical device of claim 14, wherein the electric tool comprises an electric garden tool and/or an electric household tool.

16. An electrical system, comprising: a mobile communication device; a cloud in wireless communication connection to the mobile communication device; and the power supply assembly according to any one of claims 6 to 11, the remote control power supply of the power supply assembly is in wireless communication connection to the cloud; wherein the mobile communication device is configured to send a power-on request to the cloud, such that the cloud is triggered to send a power-on instruction to the remote control power supply.

17. A control method for an electrical device, implemented by a mobile communication device and comprising: establishing a wireless communication connection to a cloud, wherein the cloud is in wireless communication connection to a remote control power supply; and sending, when a power-on request is obtained, the power-on request to the cloud, such that the cloud is triggered to send a power-on instruction to the remote control power supply, the remote control power supply is driven to turn on the electrical device, and the electrical device is in a power consuming state.

18. The control method for an electrical device of claim 17, further comprising: sending, when a power-off request is obtained, the power-off request to the cloud, such that the cloud is triggered to send a power-off instruction to the remote control power supply, and the remote control power supply is driven to turn off the electrical device.

19. The control method for an electrical device of claim 18, further comprising: receiving information confirming successful power off sent from the cloud, wherein the information confirming successful power off is determined by the cloud based on power-off status information of the remote control power supply sent from the remote control power supply.

20. The control method for an electrical device of claim 17, further comprising: receiving information indicating automatic power off of the electrical device sent from the remote control power supply and forwarded by the cloud.

21. A mobile communication device, comprising: a communication apparatus, configured to establish communication with a cloud by means of a wireless network; a processing apparatus, configured to implement the method according to any one of claims 17 to 20; and a memory, configured to process or store a signal, such that the signal is in a physical storage state.

22. A control method for an electrical device, implemented by means of a cloud and comprising: establishing wireless communication connection to a mobile communication device and a remote control power supply respectively; generating, when a power-on request sent from the mobile communication device is received, a power-on instruction according to the power-on request; and sending the power-on instruction to the remote control power supply, such that the remote control power supply is driven to turn on the electrical device, and the electrical device is in a power consuming state.

23. The control method for an electrical device of claim 22, further comprising: generating, when a power-off request sent from the mobile communication device is received, a power-off instruction according to the power-off request; and sending the power-off instruction to the remote control power supply, such that the remote control power supply is driven to turn off the electrical device.

24. The control method for an electrical device of claim 23, further comprising: receiving power-off status information of the remote control power supply sent from the remote control power supply; determining successful power off of the remote control power supply according to the status information; and sending information confirming successful power off to the mobile communication device.

25. The control method for an electrical device of claim 22, further comprising: forwarding information indicating automatic power off of the electrical device sent from the remote control power supply to the mobile communication device.

26. A cloud, comprising: one or more central processing units, which are configured to implement the method according to any one of claims 22 to 25; one or more memories and/or mass storage devices; and one or more wired or wireless network interfaces.

27. A control method for an electrical device, implemented by means of a remote control power supply and comprising: establishing wireless communication connection to a cloud, wherein the cloud is in wireless communication connection to a mobile communication device; receiving a power-on instruction sent from the cloud, wherein the power-on instruction is generated by the cloud according to a power-on request sent from the mobile communication device; and turning on the electrical device according to the power-on instruction, such that the electrical device is in a power consuming state.

28. The control method for an electrical device of claim 27, further comprising: receiving a power-off instruction sent from the cloud, wherein the power-off instruction is generated by the cloud according to a power-off request sent from the mobile communication device; and turning off the electrical device according to the power-off instruction.

29. The control method for an electrical device of claim 28, further comprising: sending power-off status information of the remote control power supply to the cloud, such that the cloud determines whether successful power off of the remote control power supply is achieved according to the status information.

30. The control method for an electrical device of claim 27, further comprising: forwarding information indicating automatic power off of the electrical device to the mobile communication device by means of the cloud during automatic power off of the remote control power supply and the electrical device.

31. A remote control power supply, comprising: a control unit, which is configured to implement the method according to any one of claims 27 to 30.

32. A remote control power supply for an electrical device, configured to receive a control instruction sent from a mobile communication device by means of a wireless network, and comprising: a battery or a battery pack, configured to supply electric energy to the electrical device; a wireless communication unit, configured to be in wireless communication with the mobile communication device; and a control unit, configured to receive the control instruction sent from the mobile communication device by means of the wireless communication unit; wherein the control instruction at least comprises a power-on instruction, and the control unit is configured to drive the battery or the battery pack to turn on the electrical device according to the power-on instruction.

33. The remote control power supply for an electrical device of claim 32, wherein the control instruction further comprises: a power-off instruction, a parameter setting instruction, and/or a parameter reading instruction; wherein the control unit is configured to drive the battery or the battery pack to turn off the electrical device according to the power-off instruction, and/or to set parameters for the remote control power supply and/or the electrical device according to the parameter setting instruction, and/or to obtain status information of the remote control power supply according to the parameter reading instruction, and send the status information to the mobile communication device by means of the wireless communication unit.

34. The remote control power supply for an electrical device of claim 32, wherein the wireless communication unit is directly in wireless communication connection to the mobile communication device.

35. The remote control power supply for an electrical device of claim 34, wherein the wireless communication unit is further in wireless communication with a cloud by means of the mobile communication device; after obtaining status information of the remote control power supply, the control unit sends the status information to the mobile communication device by means of the wireless communication unit, and the status information is forwarded to the cloud by the mobile communication device, such that the status information is stored, or is classified and stored by means of the cloud.
